# EUROPÄISCHE PATENTSCHRIFT

(11) **EP 0 982 562 B1**
(45) Veröffentlichungstag und Bekanntmachung des Hinweises auf die Patenterteilung: **01.10.2003**
(21) Anmeldenummer: 99112971.9
(22) Anmeldetag: 05.07.1999
(51) Int. Cl.: G01B 3/10

(54) **Messeil Wegsensor mit Profilen für Gehäuse und Trommel**
Measuring cable distance sensor with sectional material for casing and drum
Appareil de mesure de distances à câble avec matériau profilé pour boitier et tambour

(30) Priorität: 27.08.1998 DE 19839027
(43) Veröffentlichungstag der Anmeldung: 01.03.2000
(73) Patentinhaber: ASM Automation Sensorik Messtechnik GmbH, 85452 Moosinning (DE)
(72) Erfinder: Steinich, Klaus-Manfred, 85604 Poering (DE)
(74) Vertreter: Alber, Norbert, Dipl.-Ing.

(56) Entgegenhaltungen:
- EP-A- 0 745 829
- EP-A- 0 778 239

## Beschreibung

### I. Anwendungsgebiet

Die Erfindung betrifft Meßseil-Wegsensoren, also Wegsensoren nach dem Meßseilprinzip mit industrietauglichem Gehäuse. Derartige Wegsensoren bestehen aus einer exakt definierten und positionierten Seiltrommel, auf welche das Meßseil - in der Regel nur in einer einzigen Lage - aufgewickelt und mit dem einen Ende befestigt ist.

Das andere freie Ende des Meßseiles ist an demjenigen Gegenstand befestigt, dessen Lageveränderung exakt gemessen werden soll.

Bei relativer Entfernung dieses Gegenstandes von der Seiltrommel des Meßseil-Wegsensors werden die Winkelbewegungen der Meßseil-Trommel mittels eines damit drehfest gekoppelten Drehwinkelsensors in eine exakte Entfernungslänge umgerechnet. Eine in der Regel koaxial mit der Meßseil-Trommel wirkverbundene Drehfeder stellt bei der Wiederannäherung des zu messenden Gegenstandes das Aufrollen des Meßseiles auf der Meßseil-Trommel sicher.

### II. Technischer Hintergrund

Dabei ist es bekannt, das Gehäuse für den Meßseil-Wegsensor, welcher insbesondere Aufnahmebereiche für die Meßseil-Trommel sowie die Drehfeder aufweisen soll, aus Einzelteilen zusammenzufügen, insbesondere zu verschrauben, von denen das eine Einzelteil den Aufnahmebereich für die Drehfeder, ein weiteres Teil den Aufnahmebereich für die Meßseil-Trommel und ggf. ein weiteres teil den Aufnahmebereich für den Drehwinkelsensor bieten. Die einzelnen Teile sind dabei im Spritzgußverfahren, insbesondere aus Leichtmetall, hergestellt und durch Fräsen, Bohren etc. nachbearbeitet, oder gar aus dem Vollen durch spanende Bearbeitung hergestellt.

Auch eine Herstellung der Teile des Gehäuses aus Tiefziehteilen ist bekannt.

Derartige Gehäuse weisen jedoch je nach Herstellungsart spezifische Nachteile auf:

So sind alle Gehäuseformen, die mittels einer Ausgangsform durchgeführt werden, wie etwa beim Tiefziehen oder beim Spritzgießen, erst ab relativ großer Stückzahlen an Gehäusen wirtschaftlich.

Andererseits sind aus dem Vollen gefräste Gehäuseteile im Stückpreis gleichbleibend teuer.

Aus der EP-A-0 778 239 ist weiterhin ein Gehäuse für einen Seillängengeber bekannt, bei dem der Gehäuseteil für die Seiltrommel aus einem zylindrischen Teil besteht, welches durch stimseitige Deckel verschlossen ist.

Die axial zueinander angeordneten drehbaren Teile wie Seiltrommel und Rückstellfeder sind dabei mit ihrer Achsrichtung koaxial zu der Längsrichtung des zylindrischen Gehäuseteiles montiert.

### III. Darstellung der Erfindung

### a) Technische Aufgabe

Es ist daher die Aufgabe gemäß der Erfindung, einen Meßseil-Wegsensor zu schaffen, dessen Teile, insbesondere dessen Gehäuse, einfach und kostengünstig herzustellen ist, wobei insbesondere die bewegten Teile des Meßseil-Wegsensors, insbesondere die Meßseil-Trommel, eine möglichst geringe träge Masse aufweisen sollen.

### b) Lösung der Aufgabe

Diese Aufgabe wird durch die Merkmale des Anspruches 1 gelöst. Vorteilhafte Ausführungsformen ergeben sich aus den Unteransprüchen.

### c) Vorteile

Durch die wenigstens teilweise Herstellung des Meßseil-Wegsensors aus geraden, also endlosen, Profilen, ist es möglich, kostengünstige stranggepreßte Profile zu verwenden, die lediglich auf das gewünschte Maß abgelängt werden müssen, um als Gehäuseteil oder Teil der Meßseil-Trommel zu dienen.

Durch integrierte hinterschnittene Längsnuten in dem Profil ist es ferner möglich, ohne weitere Vorbearbeitung mittels selbstschneidender Schrauben Deckel auf den offenen Seiten der Profilabschnitte zu befestigen. Somit ist die einzige Vorbearbeitung die Öffnungen zum Hindurchstecken der die drehenden Teile tragenden Welle des Meßseil-Wegsensors am Profil anzubringen.

Dadurch kann ein kompaktes und robustes Gehäuse sehr preisgünstig hergestellt werden, wobei zusätzlich noch die Relation zwischen Qualität und Preis durch Wahl des Materials, insbesondere die Wahl zwischen Kunststoff und Leichtmetall, beeinflußt werden kann.

Für das Gehäuse können dabei unterschiedliche Profilformen verwendet werden, also entweder offene Profilformen wie ein Plattenprofil, ein L-Profil oder ein C-Profil, oder geschlossene Profilformen wie ein Kastenprofil oder ein Doppelkastenprofil. Bei den offenen Profilformen wird die Meßseil-Trommel parallel zu einem der Hauptschenkel des Profils angeordnet, welcher von der die Meßseil-Trommel tragenden Welle durchdrungen wird. Insbesondere befindet sich die Meßseil-Trommel dabei im Freiraum eines L-Profiles oder C-Profiles. Dabei sind die Meßseil-Trommel einerseits und die Drehfeder andererseits, ggf. zusätzlich auch der Drehwinkelsensor andererseits, in jeweils separaten Gehäuseteilen untergebracht, die lösbar gegeneinander befestigt, insbesondere verschraubt werden.

Insbesondere wird bei der Montage der Drehfeder, die in der Regel eine spiralig in einer Ebene gewickelte Flachformfeder ist, dabei so vorgegangen, daß die Drehfeder einerseits drehfest mit der Welle und andererseits drehfest mit ihrem Gehäuse verbunden wird, und diese Drehfederschale, die einen Teil des Gehäuses darstellt, dann relativ zu den übrigen Gehäuseteilen um die Welle so lange gedreht wird, bis die Drehfeder ihre vorgespannte Position erreicht hat. Erst dann erfolgt ein Verschrauben oder anderweitiges Verbinden der Drehfederschale mit den übrigen Gehäuseteilen.

Bei Verwendung von Kastenprofilen kann in jeweils einem Kastenprofil einerseits die Drehfeder, andererseits die Meßseil-Trommel, unter Umständen in einem weiteren Kastenprofil auch der Drehwinkelsensor untergebracht werden.

Die Verbindung der drei Kastengehäuse kann dabei direkt oder indirekt mittels übergreifender Längsdeckel, die mit allen drei Profilen verschraubt sind, erfolgen.

Bei Verwendung eines Mehrfach-Kastenprofiles, wie etwa eines Doppelkastenprofiles, ist in jedem der Hohlräume einerseits die Drehfeder, andererseits die Meßseil-Trommel und ggf. in einem dritten Hohlraum der Drehwinkelgeber untergebracht.

Die Achsrichtung der die drehenden Teile verbindenden Welle verläuft quer zur Längsrichtung des Profils und durchdringt deren Hauptschenkel, welcher zur Unterbringung von Gleit- oder Wälzlagern eine vergrößerte Wandstärke gegenüber den Nebenschenkeln aufweisen kann. Zusätzlich können die Profile mit seitlich außen wenigstens einseitig überstehenden integralen Fußplatten ausgestattet sein, die der Verbindung des Meßseil-Wegsensors mit anderen Bauteilen dienen.

Zur Verteilung der beweglichen Massen können die Drehfeder einerseits und der Drehwinkelsensor andererseits auf gegenüberliegenden Seiten der Meßseil-Trommel angeordnet sein. Die andere Möglichkeit besteht darin, die Drehfeder zwischen dem Drehwinkelsensor und der Meßseil-Trommel anzuordnen, was insbesondere bei Anwendungen bevorzugt wird, bei denen wegen einer sauberen Umgebung der Aufnahmebereich für die Meßseil-Trommel nicht verschlossen werden muß. Dadurch ist es möglich, die Meßseil-Trommel auf der einen Seite des Hauptschenkels eines offenen Profiles anzuordnen, und auf der anderen Seite des Hauptschenkels, welcher die tragende Funktion des Gehäuses darstellt, die Drehfeder anzuordnen.

Auch hier muß der Drehwinkelsensor, egal an welchem Ende der Welle er angeordnet wird, über eine Drehmomentstütze am Mitdrehen mit der Meßseil-Trommel gehindert werden.

Die hinterschnittenen Nuten können einerseits dem Verschrauben von Längsdeckeln mit selbstschneidenden Schrauben dienen, andererseits jedoch auch dem Einschieben von Platinen mit elektronischen Schaltungen und Bauteilen in Längsrichtung, was insbesondere dann möglich ist, wenn bei einem Profil mit zwei parallel laufenden Schenkeln die Längsnuten gegenüberliegend paarweise angeordnet sind.

Auch die Befestigung von Zwischenwinkeln zur Befestigung weiterer Bauteile, etwa einer Bremse für die Meßseil-Trommel etc., ist durch Verschrauben in den Längsnuten auf einfache Art und Weise möglich.

Eine Bremse an der Meßseil-Trommel und/oder der Drehfeder soll dabei insbesondere nur in Aufwickelrichtung des Meßseiles dienen, und ist für solche Anwendungsfälle sinnvoll, in denen das Aufwickeln so schnell vor sich gehen kann, daß ein nicht korrektes lagenweises dichtes Wickeln des Meßseiles aufgrund zu hoher Aufwickelgeschwindigkeit möglich ist.

Die Bremse kann eine Fluidbremse (bestrichen mit Luft oder Flüssigkeit), eine Wirbelstrombremse oder eine Magnetbremse, vorzugsweise jedoch immer eine verschleißfreie Bremse, sein.

In ebenso einfacher und kostengünstiger Art und Weise kann auch die Meßseil-Trommel selbst wenigstens teilweise aus einem Profil bestehen. Dabei ist darauf zu achten, daß die Meßseil-Trommel eine möglichst geringe träge Masse aufweist.

Insbesondere kann die Wickelfläche der Meßseil-Trommel aus einem Abschnitt eines Rundrohrprofiles bestehen, wobei die Verbindung zu einer zentralen Nabe vorzugsweise über Speichen mit geringer Masse erfolgen sollte. Die Speichen können dabei entweder zusammen mit der Wickelfläche und der Nabe integral in Form eines Spezialprofiles ausgebildet sein, dessen Längsrichtung der Rotationsachse der Meßseil-Trommel entspricht.

Möglich ist jedoch auch, die Verbindung der Wickelfläche mit einer Nabe über die notwendigen, radial über die Wickelfläche vorstehenden Anlaufscheiben, wobei bereits die zentrale Bohrung der Anlaufscheiben, eventuell ergänzt über Abstandselemente zwischen den Abstandsscheiben, als Nabe ausreichend sein kann. Um eine gute Maßhaltigkeit der Meßseil-Trommel zu gewährleisten und Verzug bei ihrer Montage auszuschließen, erfolgt das Zusammenfügen der Einzelteile der Meßseil-Trommel vorzugsweise über Verkleben oder über formschlüssige Blechbiegeverbindungen, je nachdem, ob die Meßseil-Trommel aus Blech oder Kunststoff besteht, wobei auch Kombinationen aus Einzelteilen unterschiedlicher Materialien möglich sind.

### d) Ausführungsbeispiele

Eine Ausführungsform gemäß der Erfindung ist im folgenden anhand der Figuren beispielhaft näher beschrieben. Es zeigen:
- Figuren 1:: einen Meßseil-Wegsensor mit einem Doppelkastenprofil,
- Figuren 2:: einen Meßseil-Wegsensor mit einem Kastenprofil,
(diese beiden Bauformen stellen den "best mode" der Erfindung dar)
- Figuren 3:: andere Bauformen mit Kastenprofil,
- Figuren 4:: einen Meßseil-Wegsensor wiederum mit einem Kastenprofil,
- Figuren 5:: eine demgegenüber abgewandelte Bauform des Meßseil-Wegsensors,
- Figuren 6:: einen Meßseil-Wegsensor mit einem C-Profil,
- Figuren 7:: andere Bauformen mit einem C-Profil,
- Fig. 8:: separate Doppelkastenprofile,
- Figuren 9:: separate Kastenprofile,
- Figuren 10:: separate C-Profile,
- Figuren 11:: separate L-Profile,
- Fig. 12:: eine Nutenform,
- Fig. 13:: eine Schnittdarstellung durch eine Wirbelstrombremse,
- Figuren 14:: Beispiele der Wellenlagerung und -dichtung im Gehäuse,
- Figuren 15:: Detaildarstellungen einer Kupplung zwischen dem Drehwinkelsensor und der Welle 56,
- Figuren 16:: Ausführungsformen des freien Einlaufstutzens 19,
- Figuren 17:: Detaildarstellungen des aus der Sensorschale 2 herausführenden Steckers mit der zugehörigen Auswertungselektronik,
- Figuren 18:: Detaildarstellungen der Verbindung der Welle 56 mit der Meßseil-Trommel 4,
- Figuren 19 bis 23:: Unterschiedliche Formen der Meßseil-Trommel 4,
- Figur 24:: Eine Darstellung eines Doppel-Gehäuses und
- Figuren 25:: Darstellungen von Seilendverbindungen.

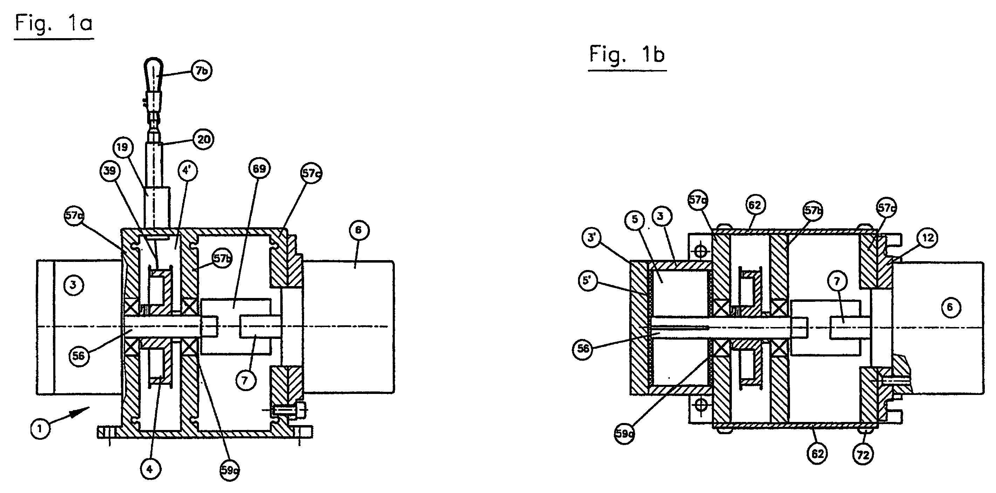

Die Figuren 1a und 1b zeigen in der Seitenansicht bzw. in der Aufsicht jeweils einen Meßseil-Wegsensor, bei dem das Kernstück dessen Gehäuse 1 aus einem Doppelkastenprofil 51e besteht. In dessen beiden Kammern befinden sich in der einen Kammer die Meßseil-Trommel 4, auf welche im Betrieb des Meßseil-Wegsensors das nicht dargestellte, durch die Linie 39 angedeutete, Seil aufgewickelt wird, an dessen freien Ende sich ein Karabiner 70 zur Befestigung an dem zu beobachtenden, beweglichen Bauteil befindet.

Die Meßseil-Trommel 4 ist drehfest auf einer Welle 56 gelagert, die mittels Rillenlagern 59a einerseits im mittleren Hauptschenkel 57b und andererseits in einem äußeren Hauptschenkel 57a drehend gelagert ist. Die Welle 56 erstreckt sich über den die Außenwand bildenden Hauptschenkel 57a, welcher in eine Kammer des Doppelkammerprofiles, welche den Aufnahmebereich 4' für die Meßseil-Trommel 4 bildet, begrenzt, hinaus nach außen. Auf diesem freien nach außen vorstehenden Ende ist gemäß Fig. 1b die Drehfeder 5 mit ihrem einen Ende drehbar befestigt durch Einschieben in den stimseitig eingebrachten Federschlitz 51 in der Welle 56. Die Drehfeder 5 wird geschützt durch ein separates Gehäuse in Form einer topfförmigen Drehfederschale 3, welche mit ihrer offenen Seite über die Drehfeder 5 gestülpt und an der Außenfläche des Hauptschenkels 57a des Doppelkastenprofiles 51e verbunden, insbesondere verschraubt ist.

Das außenliegende freie Ende der Drehfeder 5 ist dabei drehfest, insbesondere formschlüssig, im Inneren der Drehfederschale 3 befestigt, so daß das Aufziehen der Drehfeder 5 mittels der Drehfederschale 3 vor deren Verschrauben am Doppelkastenprofil 51e möglich ist.

Die Welle 56 erstreckt sich auch auf der anderen Seite über die erste Kammer, also den Aufnahmebereich 4', hinaus in die zweite Kammer des Doppelkastenprofiles 51e hinein. Dort ist auf dieses freie Ende der Welle 56 eine Kupplung 69 zur Verbindung mit dem Zapfen 7 eines Drehwinkelsensors 6 angeordnet, wobei sich der Drehwinkelsensor 6 auf die von der Drehfeder 5 abgewandte Außenfläche des Doppelkastenprofiles 51e aufgesetzt ist und der Zapfen 7 in die angrenzende Kammer des Doppelkastenprofiles 51e hineinragt zur Verbindung mit der Kupplung 69, welche geringfügigen Winkelversatz und/oder Achsversatz zwischen dem Drehwinkelsensor 6 einerseits und der Welle 56, welche die Meßseil-Trommel 4 sowie die Drehfeder 5 trägt, andererseits ausgleichen soll.

Dabei erfolgt - wie am besten in Fig. 1b zu erkennen - die Befestigung des Drehwinkelsensors 6 mittels eines Adapterringes 12, welcher zunächst am Drehwinkelsensor 6 verschraubt ist, und über diesen radial nach außen hervorsteht, so daß anschließend an diesem Überstand ein Verschrauben des Adapterringes 12 an dem äußeren Hauptschenkel 57c des Doppelkastenprofiles 51e möglich ist.

Wie am besten Fig. 1b zeigt, müssen die Hauptschenkel 57a, 57b, 57c lotrecht zu ihrer Erstreckung durchbohrt werden, um Durchtrittsöffnungen für die Welle 56 bzw. deren Lager 59a sowie wenigstens den Zapfen 7 des Drehwinkelsensors 6 zu schaffen. Wie Fig. 1b zeigt, ist die Durchtrittsöffnung im Hauptschenkel 57c größer als der Zapfen 7, nämlich so groß, daß der nicht mitdrehende, fest am Drehwinkelsensor 6 angeordnete Zentrierbund 8 in die Durchtrittsöffnung paßt, wodurch die exakte Lage des Drehwinkelsensors 6 relativ zum Doppelkastenprofil 51e festgelegt wird.

Fig. 1b zeigt ferner das Verschließen der Stirnseiten des Doppelkastenprofiles 51e mittels Längsdeckeln 62, die mit dem Doppelkastenprofil 51e verschraubt werden, indem die Deckelschrauben 72 direkt in die hinterschnittenen Längsnuten 53, welche auf den Innenseiten des Doppelkastenprofiles 51e ausgebildet sind, direkt eingeschraubt werden, weshalb als Deckelschrauben 72 selbstschneidende Schrauben verwendet werden.

Wie Fig. 1a zeigt, weist das Doppelkastenprofil 51e zusätzlich eine Verlängerung des unteren horizontalen Nebenschenkels 58 über das eigentliche Kastenprofil nach außen überstehend in Form von Fußplatten 52 auf, mit deren Hilfe eine Verschraubung des gesamten Meßseil-Wegsensors an einem tragenden Bauteil möglich ist.

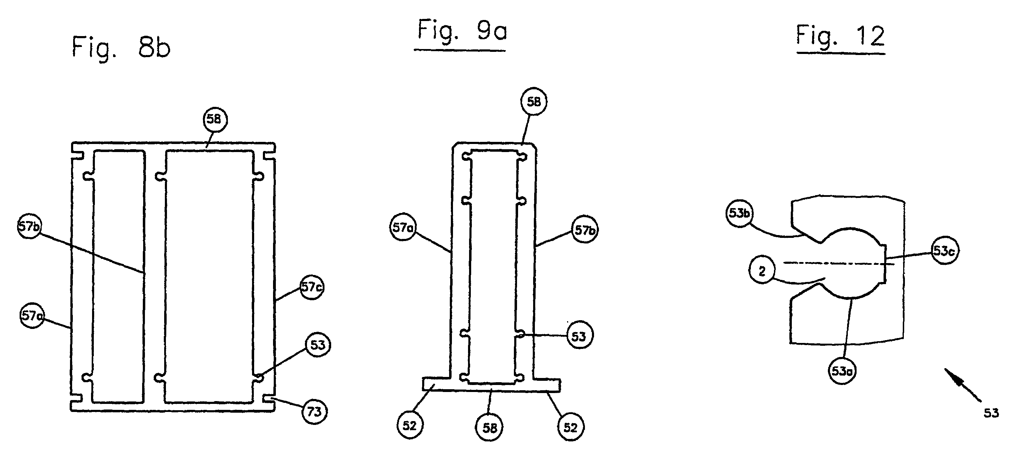

Die Figuren 8 zeigen Doppelkastenprofile 51e in separater Darstellung ähnlich dem Doppelkastenprofil 51e aus Fig. 1.

In den Figuren 8 sind jedoch die Hauptschenkel 57a - 57c - im Gegensatz zu den Figuren 1 - über ihre gesamte Höhe mit einem gleichbleibenden, relativ dicken Querschnitt ausgebildet, der ausreicht, um darin beispielsweise Rillenlager 59a für die Welle 56 nach entsprechender Durchbohrung aufzunehmen.

Die Dicke der Hauptschenkel 57a, 57b, 57c ist dabei ca. dreimal so groß wie die Dicke der hierzu im rechten Winkel stehenden, horizontalen Nebenschenkel 58.

Entsprechend sind auch die hinterschnittenen Längsnuten 53, die primär der Verschraubung von Längsdeckeln 62 dienen, in den Hauptschenkeln 57a, 57b, 57c untergebracht, und dabei auf den äußeren Hauptschenkeln 57a, 57c an deren Innenseiten. Die Form der Längsnuten 53 ist Ω-förmig, so daß der hinterschnittene Teil eine weitestgehend runde Kontur aufweist, um über einen möglichst großen Teil des Umfanges einer selbstschneidenden, dort eingeschraubten Schraube einen Gewindeeingriff bieten zu können.

Bei allen in den Figuren 8-11 dargestellten Profilen handelt es sich um Profile, deren Querschnittsform, einschließlich der Längsnuten 53, sich in Blickrichtung, also in der Tiefe der Darstellungen 8 - 11, nicht ändert und die sich in gerader Richtung erstrecken, und daher auch als z. B. Strangpreßprofil aus Kunststoff oder Leichtmetall hergestellt werden können.

Die Figuren 8a und 8b zeigen ferner, daß vor allem in der rechten Kammer, in welcher später die Kupplung 69 untergebracht ist, die Längsnuten 53 in den diese Kammer begrenzenden Hauptschenkeln 57b, 57b paarweise einander gegenüberliegend angeordnet sind. Dadurch können diese Längsnuten 53 auch zum formschlüssigen Einschieben von Platinen, welche elektronische Schaltungen aufweisen, verwendet werden, wodurch der Freiraum außerhalb der relativ schmal bauenden Kupplung 69 zusätzlich zur Unterbringung der Auswerteelektronik genutzt werden kann. Während das Doppelkastenprofil der Figur 8a die seitlich beidseits überstehenden integralen Fußplatten 52, deren Wandstärke zwischen der Wandstärke der Hauptschenkel 57 und der Wandstärke der Nebenschenkel 58 liegt, aufweist, besitzt die Bauform der Fig. 8b keine derartigen Fußplatten. Eine Befestigung an anderen Bauteilen erfolgt dagegen über an den Außenseiten der äußeren Hauptschenkel 57a, 57c in der Nähe deren Endbereiche paarweise gegenüberliegend eingearbeitete Klemmnuten 73, in welche die vorstehenden Nasen von Befestigungsteilen hineinragen können, welche an einem anderen Bauteil verschraubt sind.

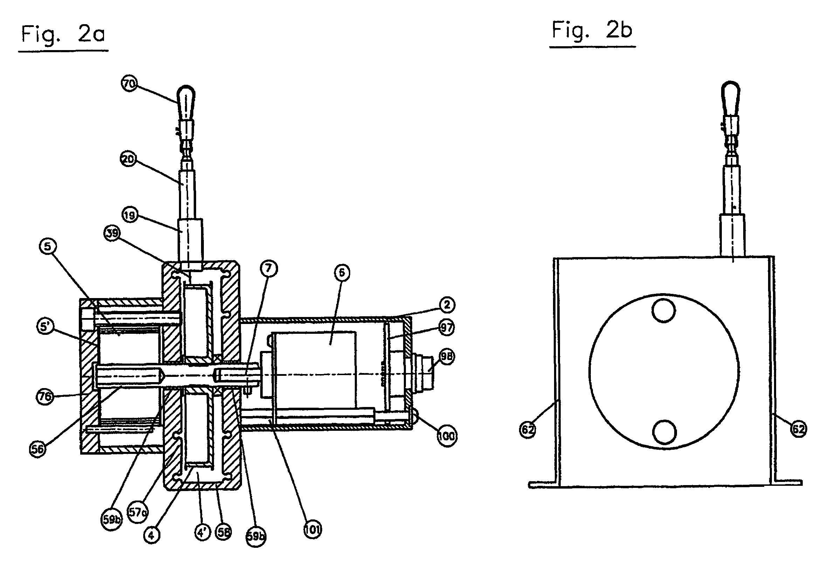

Die Figuren 2a, 2b zeigen einen Meßseil-Wegsensor in Seitenansicht und Frontansicht, bei dem der Kern des Gehäuses aus einem Kastenprofil 51d mit nur einer Kammer besteht, welche als Aufnahmebereich 4' für die Meßseil-Trommel 4 dient.

Auf die Beschreibung übereinstimmender Bauteile und Anordnungen gegenüber der Lösung der Figuren 1 wird verzichtet.

Die Unterschiede der Lösung gemäß Fig. 2 bestehen in folgendem:

Zum einen ist die Verbindung zwischen dem Zapfen 7 der Welle des Drehwinkelsensors 6 mit der Welle 56 der Meßseil-Trommel 4 nicht in einer separaten Kammer des Profiles untergebracht, sondern die Welle 56 ist so stark dimensioniert, daß der Zapfen 7 in eine stirnseitige Längsbohrung des einen Endes der Welle 56 direkt eingeschoben und mittels einer Klemmschraube 74 mit dieser drehfest verbunden ist. Ein Winkelversatz zwischen dem Drehwinkelsensor 6 und der Welle 56 ist damit nicht möglich. Der Drehwinkelsensor 6 ist lediglich über eine Drehmomentstütze 75 am Mitdrehen gehindert, welche in einem quer zur Achsrichtung der Welle 56 und auch der Welle des Drehwinkelsensors 6 verlaufenden Blechplatte besteht und zusammen mit der topfförmigen Sensorschale 2, welche den Drehwinkelsensor 6 als Gehäuse umgibt, an der Außenseite des Kastenprofiles 51d verschraubt ist.

Ein weiterer Unterschied besteht darin, daß die Drehfeder 5 durch ein Gehäuse geschützt ist, welches einerseits aus einem Abschnitt eines Rundrohrprofiles 51f besteht, welches die Drehfeder 5 umgibt, und auf der freien Stirnseite von einem Drehfederdeckel 76 verschlossen ist, welcher gleichzeitig als Lagerschild dient. Der Drehfederdeckel 76 ist über Schrauben, welche bis in den Hauptschenkel 57a des Kastenprofiles 51d reichen, gegen dieses Kastenprofil 51d verschraubt.

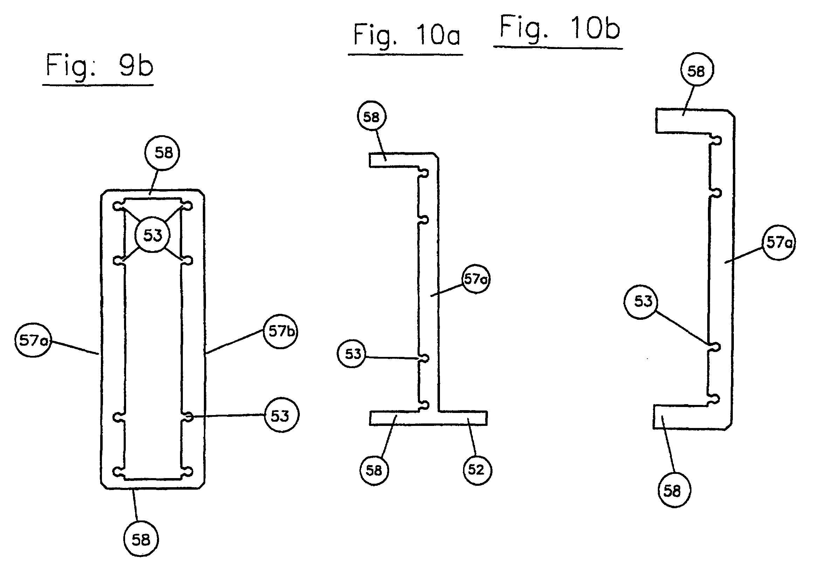

Das Kastenprofil 51d der Figuren 2a, 2b ist separat in Fig. 9b dargestellt. Dabei sind in den Hauptschenkeln 57a, 57b, die wiederum eine größere Wandstärke als die verbindenden Nebenschenkel 58 aufweisen, wiederum paarweise gegenüberliegend die Längsnuten 53 ausgebildet, wobei jeweils eine Längsnut nahe am Eckbereich und jeweils ein weiteres Paar von Längsnuten etwas weiter zur Mitte hinliegend angeordnet ist.

Da in den Figuren 2a, 2b ein Kastenprofil 51d ohne seitlich überstehende Fußplatten 52 verwendet ist, sind als Längsdeckel 62 L-Profile verwendet, deren einer Schenkel die offenen Stirnseiten des Kastenprofiles 51d verschließen, während die anderen Schenkel seitlich überstehend der Befestigung des Meßseil-Wegsensors an einem anderen Bauteil dienen, analog zur Funktion der sonst beidseits überstehenden Fußplatten 52, wie sie die Bauform der Fig. 9a des Kastenprofiles 51d erfüllen.

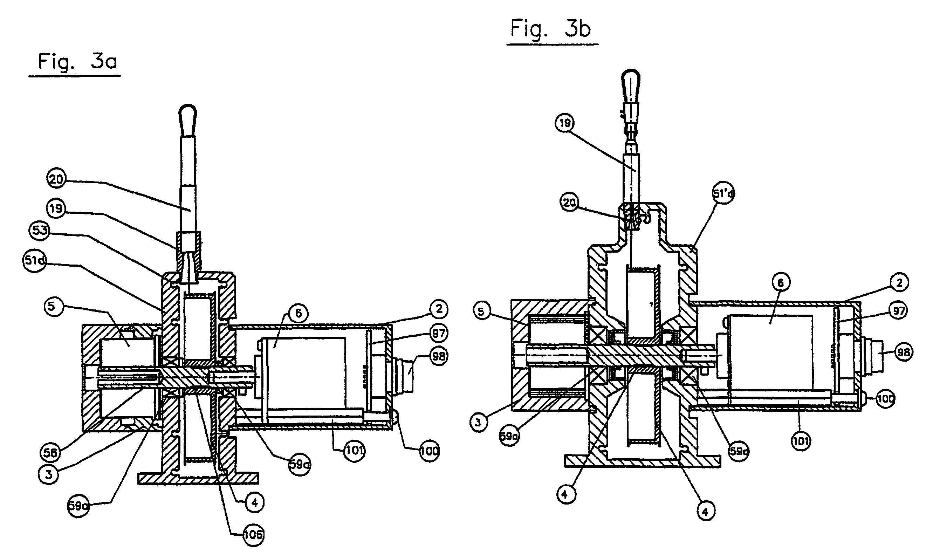

Ein derartiges Kastenprofil 51 d mit den Fußplatten 52 zeigt der Meßseil-Wegsensor gemäß Fig. 3a.

Dabei ist die Drehfeder 5 jedoch wiederum von einer topfförmigen, einstückigen Drehfederschale 3 als Gehäuse umgeben, wie bei der Ausführung gemäß Figuren 1.

Anordnung und Befestigung des Drehwinkelsensors 6 sowie der ihn umgebenden Sensorschale 2 entsprechen der Lösung gemäß Fig. 2 bis auf in der Außenfläche des Kastenprofiles 51d angeordneter Ringnut, in welche das freie Ende der im Querschnitt runden Sensorschale 2 eingesetzt und damit positioniert wird.

Fig. 3b zeigt einen Meßseil-Wegsensor ähnlich der Lösung gemäß Fig. 3a, jedoch mit einem Kastenprofil 51'd, dessen Besonderheit darin besteht, daß die Wandstärke des Kastenprofiles im mittleren Bereich, also im Bereich des Durchgangs der Welle 56 vergrößert ist, um hier mehr Raum für eine Lagerung und Wellendichtung zwischen der Welle 56 und dem Kastenprofil zur Verfügung zu haben.

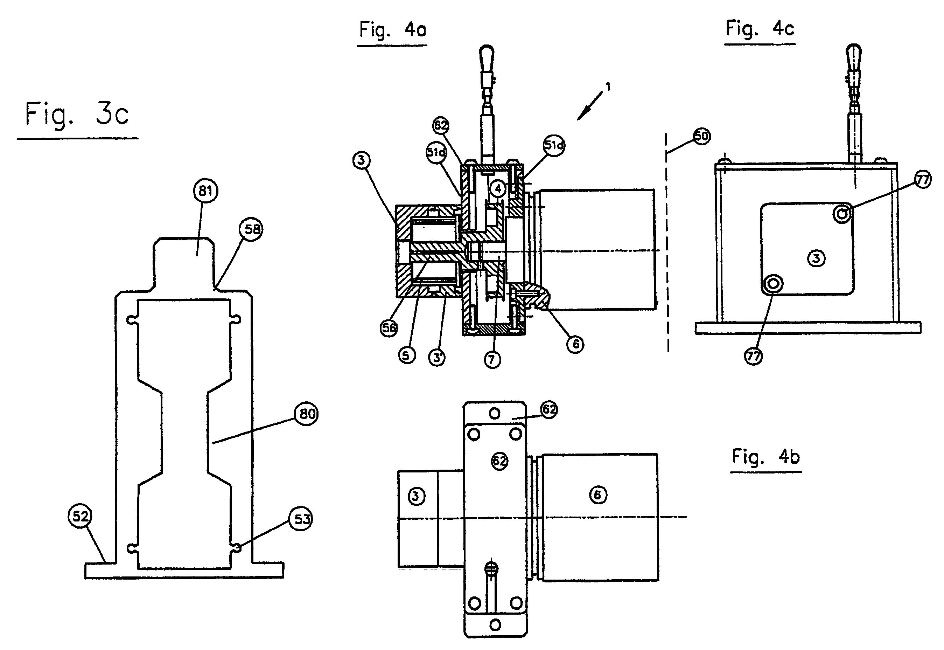

Um die Außenabmessungen des Kastenprofiles 51'd nicht zu vergrößern, weist das Kastenprofil 51'd zu diesem Zweck eine nach innen gerichtete Erhebung in den Seitenschenkeln auf, vorzugsweise mit schräg ansteigenden Flanken, wie am besten in der Darstellung des Profiles alleine in der Fig. 3c zu erkennen.

In dieser Darstellung ist auch der auf der Oberseite, also einer der Schmalseiten, vorzugsweise derjenigen von den Fußplatten 52 entgegengesetzten Schmalseiten, überstehende massive Fortsatz 81 des Strangpreßprofiles zu erkennen. Dieser Fortsatz 81 wird später durch Nachbearbeitung zu einem Seileinlaufstutzen umgearbeitet, indem in den Fortsatz 81 eine Durchgangsbohrung in Seileinlaufrichtung eingebracht wird, in welche auch ein Seilführungselement eingesetzt werden kann. Eine separate Anfertigung des Seileinlaufstutzens und Verbindung mit dem Gehäuse ist damit nicht mehr notwendig.

Die Figuren 4a - 4c zeigen einen Meßseil-Wegsensor in Seitenansicht, Aufsicht und Frontansicht. Auch dabei besteht das Kernstück des Gehäuses 1 aus einem Kastenprofil 51d, in dem sich die Meßseil-Trommel 4 befindet.

Im Unterschied zur Lösung gemäß Fig. 3 verläuft bei Fig. 4 die Längsrichtung 50 des Kastenprofiles 51d jedoch nicht horizontal, sondern vertikal, so daß die horizontale obere und untere Stirnfläche des Profilabschnittes 51d durch Deckel verschlossen werden müssen.

Dabei wird der untere Längsdeckel 62 stärker ausgebildet, und so groß gewählt, daß er seitlich über die Grundfläche des Kastenprofiles 51d hinausragt - wie am besten in Fig. 4b zu erkennen - um an diesem Überstand der Befestigung des Meßseil-Wegsensors durch Verschraubung an einem anderen Bauteil zu dienen.

Ein weiterer Unterschied ist in Fig. 4a ersichtlich:

Die Welle 56 ist zusammen mit der Meßseil-Trommel einstückig beispielsweise als Kunststoffspritzteil ausgebildet, so daß der Zapfen 7 des Drehwinkelsensors von der Stirnseite her so weit eingeschoben werden kann, daß er den Axialbereich der Meßseil-Trommel 4 sogar durchdringt, dadurch kommt die Meßseil-Trommel 4 sehr nah am Drehwinkelsensor 6 zu liegen, nämlich unmittelbar an dessen Zentrierbund 8, so daß eine Biegung des Zapfens 7 bzw. der Welle und dadurch ein Winkelversatz zwischen beiden Bauteilen weitestgehend ausgeschlossen ist.

Fig. 4c zeigt aus der Richtung der Drehfederschale 3 deren in den Ecken der viereckigen Drehfederschale 3 angeordnete Verschraubungen 77 gegenüber dem Kastenprofil 51d.

Somit befindet sich der Seileinlaufstutzen 19 und das Seilführungselement 20 in dem oberen Längsdeckel 62, und nicht - wie bei den Lösungen gemäß Figuren 1 - 3 - in einem der Nebenschenkel 58 des Profiles 51.

Der Vorteil liegt in der Möglichkeit der Vorfertigung der Längsdeckel 62 einschließlich der notwendigen Bohrung für den Seileinlauf, ohne daß diese Arbeiten an einem Abschnitt des Profils durchgeführt werden müssen. Dies eröffnet auch die Möglichkeit, den Seileinlauf an unterschiedlich weit radial außenliegenden Stellen des Deckels 62 anzuordnen, je nach Größe der verwendeten Meßseil-Trommel und der benötigten Seillänge.

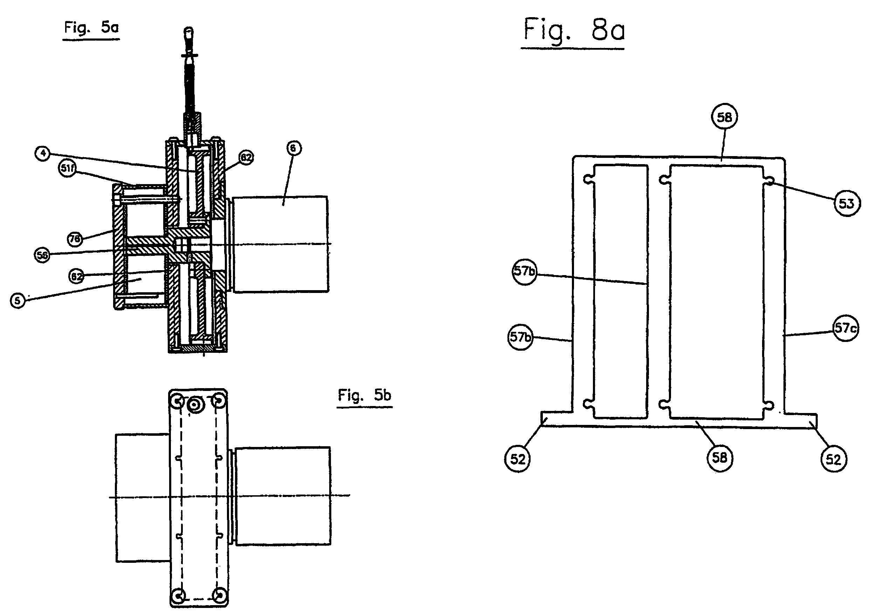

Die Figuren 5a, 5b zeigen ebenfalls einen Drehwinkelsensor, dessen Gehäuse ein Kastenprofil 51d umfaßt, welches oben und unten von einem Deckel 62 verschlossen ist, der der Übersichtlichkeit halber in der Aufsicht der Fig. 5b weggelassen wurde. Im Unterschied zur Lösung der Fig. 4 ist die Drehfeder 5 von einem Gehäuse umgeben, welches wiederum - wie in Fig. 2 - aus einem Abschnitt eines Rundrohrprofiles 51f besteht, welches von einem stimseitigen Drehfederdeckel 76 verschlossen ist.

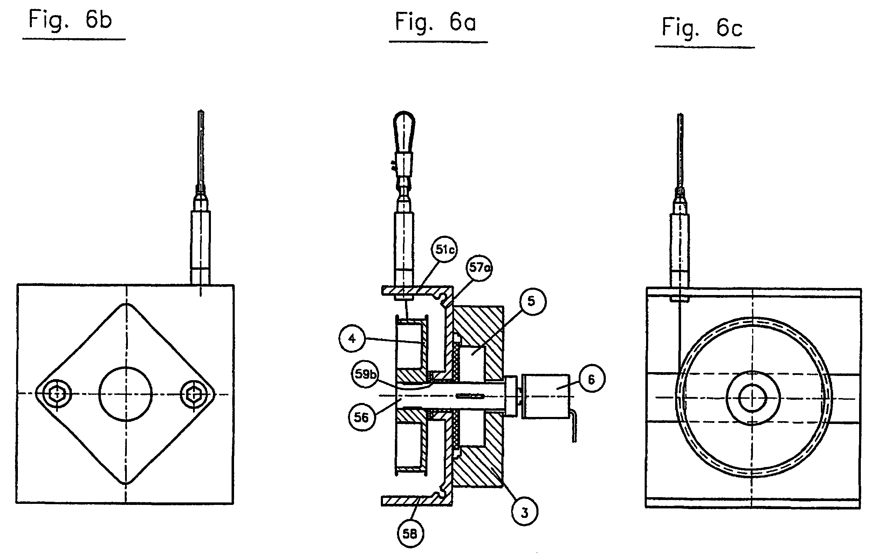

Die Figuren 6a - 6c zeigen in Seitenansicht sowie den beiden Stirnansichten eine weitere Bauform eines Meßseil-Wegsensors, bei dem jedoch die Meßseil-Trommel 4 offen im Freiraum eines C-Profiles 51c angeordnet ist. Derartige Ausführungsformen können nur in einer sauberen Umgebung zum Einsatz kommen.

Ein entsprechendes ähnliches C-Profil ist separat in Fig. 10b dargestellt, wobei dort der Hauptschenkel 57a und die beiden frei endenden Nebenschenkel etwa die gleiche Materialdicke aufweisen. Die Längsnuten 53 sind nur im Hauptschenkel 57a und zum Innenraum des C-Profiles hinweisend angeordnet. Bei dem C-Profil gemäß Fig. 10a ist der eine Nebenschenkel 58 über den Hauptschenkel 57a hinaus als Fußplatte 52 verlängert.

Im Gegensatz dazu ist das C-Profil 51 der Figuren 6 durchgängig, also am Hauptschenkel 57a ebenso wie an den Nebenschenkeln 58, mit relativ geringer Wandstärke ausgeführt. Dafür ist in der Mitte des Hauptschenkels 57a eine Vergrößerung der Wandstärke vorgenommen, also in dem Bereich, in dem das Durchbohren für die Welle 56 und deren Lagerung mittels einem Gleitlager 59b, erfolgt. An Längsnuten 53 ist in jedem Eck des C-Profiles nur jeweils eine Längsnut direkt im zu diesem Zweck abgeschrägten und verstärkten Inneneckbereich angeordnet.

Die Meßseil-Trommel 4 ist mit der Welle 56 lösbar verbunden, beispielsweise über Paßfedernuten, und die Welle 56 erstreckt sich über den Hauptschenkel 57a des C-Profiles 51c hinaus.

Wie Fig. 6a zeigt, ist auf der Außenseite des Hauptschenkels 57a die Drehfeder 5 angeordnet, die durch eine Drehfederschale 3 geschützt ist. Wiederum außerhalb der Drehfederschale 3 ist der Drehwinkelsensor 6 mit seinem Zapfen 7 in das freie Ende der Welle 56 eingesteckt. Damit befindet sich - im Gegensatz zu allen bisher erläuterten Bauformen - nunmehr die Drehfeder 5 zwischen der Meßseil-Trommel 4 und dem Drehwinkelsensor 6.

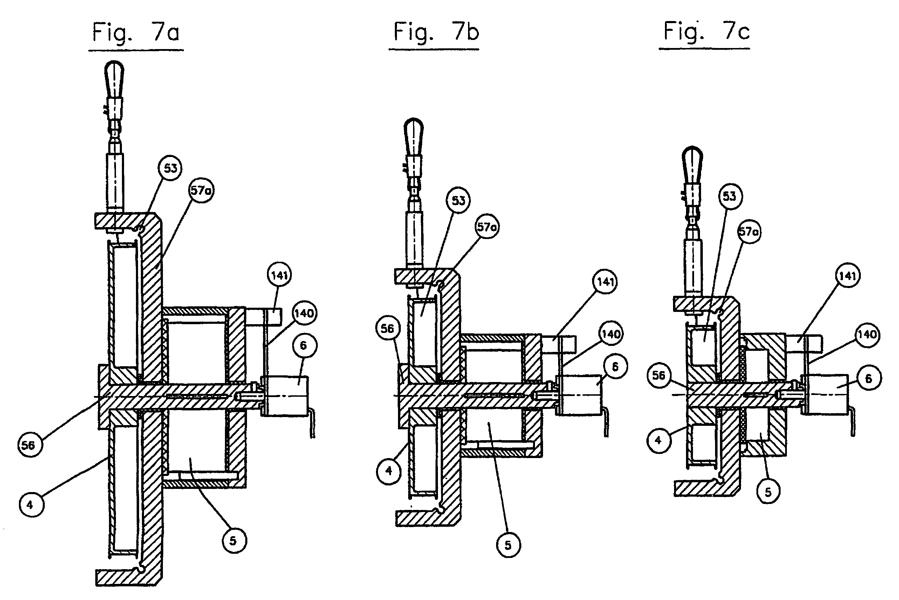

Dies gilt auch für die in den Figuren 7a bis 7c dargestellten Bauformen, die lediglich der Erläuterung des Vorteiles dienen sollen, daß aufgrund der Verwendung eines separaten Gehäuseteiles für die Meßseil-Trommel 4 in Form eines C-Profiles 51c je nach gewünschter Größe der Meßseil-Trommel unterschiedlich dimensionierte C-Profile 51c verwendet werden können, ohne daß Änderungen an den anderen Bauteilen, also Drehfeder, Gehäuse für die Drehfeder, Drehwinkelsensor und dessen Befestigung etc. vorgenommen werden müssen. Dennoch ist - ohne daß dies notwendig wäre - bei den Lösungen gemäß Figuren 7a und b die Drehfederschale aus einem Rohrstück und einer stimseitigen Abschlußplatte aufgebaut, bei Fig. 7c dagegen als topfförmige einstückiges Bauteil.

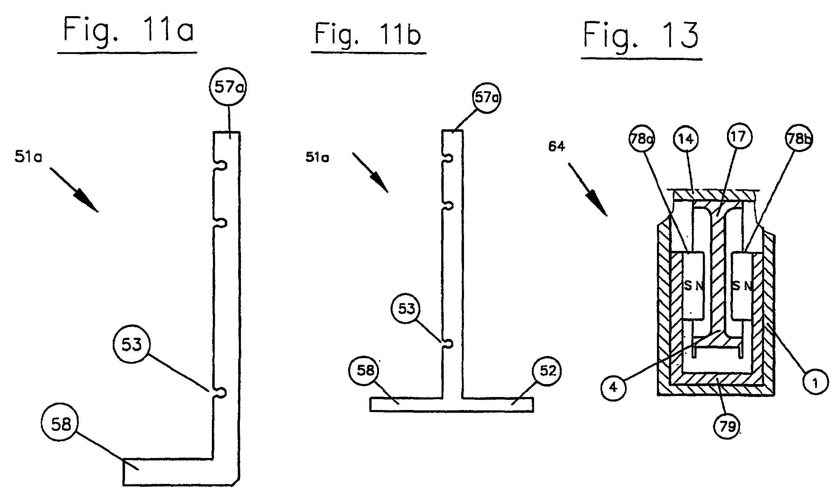

Bei allen drei Lösungen ist der Sensor 6, welcher mittels einer Klemmschraube in der Welle 56 drehfest verklemmt ist, über einen radial nach außen strebenden Hebel als Drehmomentstütze 140 abragt, welche an ihrem freien Ende über einen Bolzen 141 am Drehfedergehäuse fixiert ist. Die Figuren 11a, 11b zeigen weiterhin ein L-Profil 51a, und zwar in Fig. 11b mit einem auf der Rückseite des Hauptschenkels 57a verlängerten Nebenschenkels 58 zu einer Fußplatte 52.

Auch derartige L-Schenkel können - ebenso wie ein C-Profil 51c in den Figuren 6 und 7 - zur Befestigung der Meßseil-Trommel 4 und/oder der Drehfeder 5 auf den gegenüberliegenden Seiten des Hauptschenkels 57a dieses L-Profiles verwendet werden.

Ebenso ist es denkbar, die Drehfeder 5 - unabhängig der Gehäuseform für die Meßseil-Trommel 4 - ebenfalls durch einen Abschnitt eines C-Profiles oder eines einzelnen Kastenprofiles zu schützen, wobei dessen Länge vorzugsweise der Länge des Profilabschnittes für die Meßseil-Trommel 4 entspricht, um durch gemeinsame Längsdeckel beide Gehäuseteile zu verschließen und zu verbinden.

Fig. 12 zeigt eine der Längsnuten 53 im Detail:

Der Einlauf in den kreisförmigen Bereich 53a ist als in die Tiefe verjüngender Kegelstumpf 53b ausgebildet, und der Nutengrund 53c ist eben ausgeführt in Form einer flachen Rechtecknut im Grunde des Kreisförmigen Bereiches 53a. Dies erleichtert das Einschieben von z. B. Elektronikplatinen in ein paar von einander gegenüberliegenden Längsnuten 53.

Fig. 13 zeigt weiterhin in Detaildarstellung eine Bremse 64 in der Bauform als Wirbelstrombremse. Dabei sind zwei bezüglich Ihrer Polung entgegengesetzt ausgerichtete Permanentmagnete 78a, 78b beidseits der dazwischen frei drehenden Meßseil-Trommel 4 angeordnet, welche abzubremsen ist. Die Permanentmagnete 78a, 78b sind über ein U-förmiges, die Meßseil-Trommel 4 außen umgreifendes, Flußstück 79, welches aus einem guten magnetischen Fluß ermöglichenden Material wie etwa Eisen besteht, miteinander verbunden. Der zwischen den beiden Magneten 78a, 78 bewirkte magnetische Fluß hemmt die Drehung der Meßseil-Trommel 4, wobei die Stärke der Hemmung durch Veränderung des freien Abstandes zwischen den Magneten und der Meßseil-Trommel 4 verändert werden kann.

Für die Funktion der Wirbelstrombremse ist es notwendig, daß dann das die Permanentmagnete 78a,b sowie die Trommel 4 umgebende Gehäuse 1, an dem das Flußstück 79 befestigt ist, aus einem nicht magnetischen Material, beispielsweise einem Kunststoff oder Aluminium, besteht.

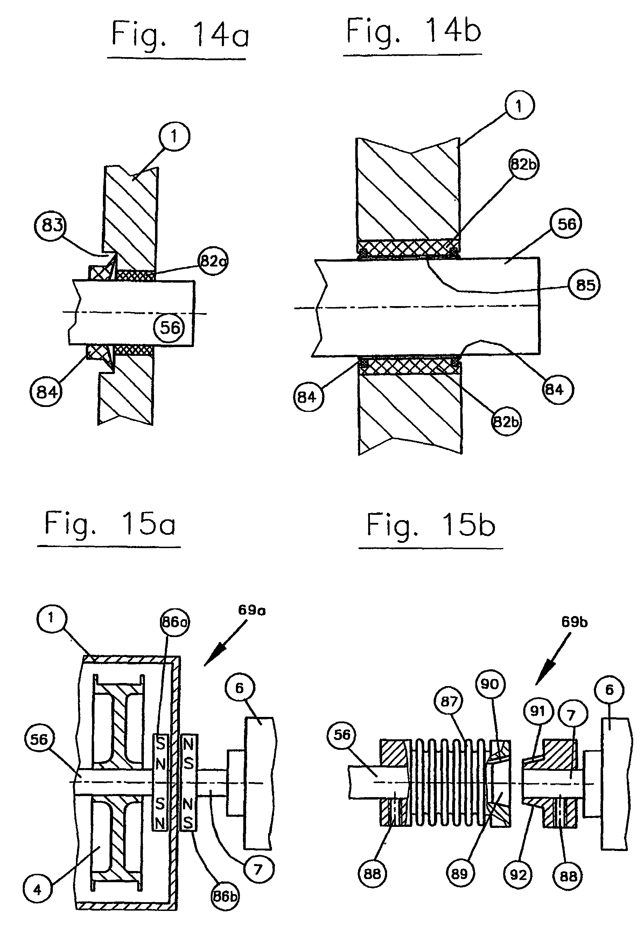

Die Figuren 14 zeigen die Lagerung und Abdichtung der Welle 56 in einer der Wandungen des Gehäuses 1 im Detail mittels eines Gleitlagers 82a, 82b. In Fig. 14a ist die Wandstärke des Gehäuses 1 im Bereich des Gleitlagers 82a reduziert, und über die verbleibende Dicke der Durchgangsbohrung in die Gehäusewand das buchsenförmige Gleitlager 82a, welches in der Regel aus Kunststoff besteht, eingesetzt.

Die Dickenverringerung erfolgt in Form einer im Querschnitt rechtwinkligen, ringförmig um den Wellendurchgang herum ausgeformten Schulter 83, in welche eine - in axialer Richtung der Welle 56 betrachtet - V-förmige, ringförmige Dichtung 84 mit ihrer Dichtlippe anliegt. Die Dichtung 84 dreht dabei mit der Welle 56 mit, und liegt gleitend in der Schulter 83 an.

Fig. 14b zeigt demgegenüber eine Lösung, die vorzugsweise bei einem Gehäuse 1 mit größerer Wandstärke angewandt wird. Das buchsenförmige Gleitlager 82b erstreckt sich dabei vorzugsweise über die gesamte Dicke der Wand des Gehäuses 1, oder sogar seitlich über dieses hinaus. In den stirnseitigen Endbereichen sind jeweils ringförmige Dichtungen 84 in entsprechende ringförmige Nuten des Gleitlagers 82b so eingearbeitet und fixiert, daß deren Dichtlippen radial nach innen gegen die Welle 56 weisen und an deren Außenumfang gleitend anliegen, und dabei vorzugsweise schräg nach außen - von der Wandung des Gehäuses 1 aus betrachtet - weisen.

Dies ermöglicht es, in dem entstehenden ringförmigen Freiraum zwischen dem Innenumfang des Gleitlagers 82b, dem Außenumfang der Welle 56 und den Dichtlippen der Dichtungen 84 eine Füllung aus einem Schmiermittel 85 einzubringen, und dadurch den Verschleiß der Lagerung drastisch zu reduzieren.

Die Figuren 15a,b zeigen zwei Varianten einer Kupplung 69, mit welcher die Welle 56 drehfest mit dem Zapfen 7 des Drehwinkelsensors 6 verbunden wird.

Fig. 15a zeigt eine Magnetkupplung 69a, bei welcher die die Meßseil-Trommel 4 tragende Welle 56 an ihrem stirnseitigen Ende vor der Wandung des Gehäuses 1 einen kreisförmigen Magneten 86a trägt, der in Umfangsrichtung abschnittsweise abwechselnd mit Nord- und Südpolen ausgestattet ist, und in möglichst geringem Abstand zur Innenseite des Gehäuses 1, welches aus nicht magnetischem Material besteht, mit der Welle 56 dreht.

In analoger Weise ist auf der Außenseite des Gehäuses auf dem Zapfen 7, welcher koaxial und möglichst fluchtend mit der Welle 56 angeordnet ist, ebenfalls ein solcher kreisförmiger Magnet 86b angeordnet, so daß das Drehen des innenliegenden kreisförmigen Magneten 86a über den magnetischen Fluß den mit dem Zapfen 7 und damit dem Drehwinkelsensor 6 drehfest verbundenen außenliegenden Magneten 86b mitdreht.

Fig. 15b zeigt eine Variante einer mechanischen Kupplung 69b. Diese besteht zum einen aus einem Faltenbalg 87, dessen Funktion im Ausgleichen eines Winkelversatzes zwischen den zu verbindenden Teilen, nämlich der Welle 56 einerseits und dem Zapfen 7 des Drehwinkelsensors 6 andererseits, besteht. Der Faltenbalg 87 ist in an sich bekannter Weise mit seinem einen Ende über eine Quergewindebohrung 88 und eine dort einzuschraubende, nicht dargestellte Klemmschraube auf dem Ende der Welle 56 veklemmt. Der Faltenbalg 87 weist am gegenüberliegenden stimseitigen Ende eine konische Vertiefung 89 auf, welche an wenigstens einer Stelle ihres konischen Umfanges eine in der Mantelfläche der Vertiefung 89 angeordnete und damit ebenfalls konisch zur Längsrichtung der Welle 56 verlaufende Nut 90 aufweist.

Auf dem Zapfen 57 ist ein entsprechend gestalteter Gegenkonus 92, der in die konische Vertiefung 89 paßt, wiederum mittels Querbohrung 88 und nicht dargestellter Klemmschraube drehfest verklemmt. Der Gegenkonus 92 weist dabei in Längsrichtung verlaufend auf seiner Mantelfläche wenigstens einen Vorsprung 91 auf, der in die Nut 90 der konischen Vertiefung 89 paßt.

Aufgrund eines Konuswinkels von deutlich weniger als 45°, insbesondere weniger als 30°, gegenüber der Längsrichtung der Welle 56 bzw. des Zapfens 7 erfüllt eine solche Wellenkupplung die zusätzlichen Funktionen eines Ausgleiches sowohl einer axialen Abstandsänderung zwischen Welle 56 und Zapfen 7 und ermöglicht zusätzlich eine einfache Montage.

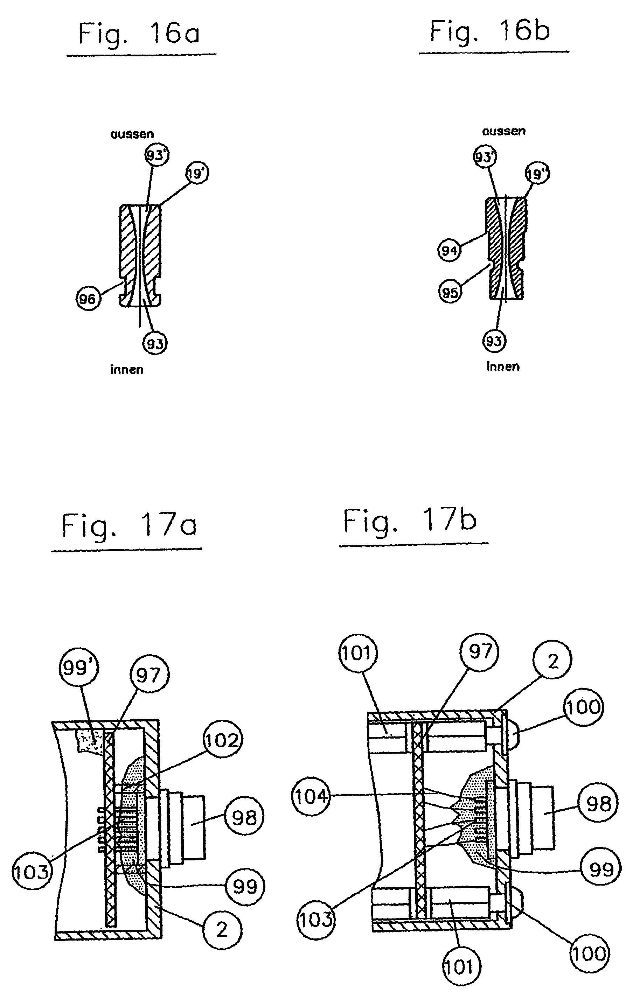

Fig. 16 zeigen einen Seileinlaufstutzen 19, wie er beispielsweise in Fig. 3a dargestellt ist, in zwei besonders vorteilhaften Ausführungsformen 19' und 19".

Beiden Bauformen ist gemeinsam, daß die in Längsrichtung des Seiles verlaufende Durchgangsöffnung nicht nur auf der Innenseite eine trompetenartige Aufweitung 93 aufweist, wie sie bei derartigen Seileinlaufstutzen bisher bekannt war und für den Seitenversatz des Meßseiles beim Bewickeln der Seiltrommel notwendig ist, sondern auch auf der außen liegenden Seite eine etwa analoge trompetenartige Aufweitung 93' besitzt.

Die Durchgangsöffnung besitzt dabei eine glatte Innenkontur ohne Kanten und harte Übergänge. Dadurch ist es möglich, daß der außerhalb des Gehäuses liegende Teil des Meßseiles nicht exakt auf der Mittellinie der Durchgangsöffnung verlaufen muß, sondern hiervon eine Seitenabweichung von ± 15° möglich ist. Es kommt dann zwar in aller Regel zu einem Anlaufen des Meßseiles an der Innenkontur des Seileinlaufstutzens 19' bzw. 19", wenn der Seileinlaufstutzen jedoch aus PEEK (Polyetherethylenketon) als Spritzgußteil oder spanend aus dem Vollen bearbeitet hergestellt ist, ergibt sich dennoch eine ausreichend lange Lebensdauer dieses Seileinlaufstutzens aufgrund der hohen Temperaturfestigkeit und Abriebfestigkeit dieses Materials.

Die ringförmige Schulter 94 bzw. halbkreisförmige Ringnut 95 dienen dabei der Montage, insbesondere des Einschubes, des Seileinlaufstutens 19" quer zur Seileinlaufrichtung in eine entsprechende Aussparung des Gehäuses. Gleiches gilt für die Ringnut 96 mit rechteckigem Querschnitt der Lösung gemäß Fig. 16a. Die Figuren 17 zeigen in Detaildarstellung die Anordnung der Elektronikplatine 97, die die Auswertelektronik trägt, innerhalb der Sensorschale 2 des Gehäuses 1, wie beispielsweise in Fig. 2a zu erkennen, sowie den damit verbundenen, aus der Sensorschale 2 herausführenden Stecker 98.

In beiden Fällen ist die Platine 97 parallel zur freien, in der Zeichnung rechten, Stirnfläche im Innern der Sensorschale 2 und im Abstand hierzu angeordnet, während der Stecker 98 diese Stirnfläche durchdringt.

Bei der Lösung gemäß Fig. 17a ist die Platine 97 über Kontaktstifte 103, die von der Innenseite des Steckers 98 abstehen, mechanisch fest verbunden durch z. B. Verlöten und stützt sich andererseits über eine Distanzbuchse 102, die ringförmig und konzentrisch um den Stecker 98 herum verläuft, gegenüber der Innenseite der Stirnfläche der Sensorschale 2 ab. Am Außenumfang der Platine 97 hält diese einen Abstand zum Innenumfang der Sensorschale 2 ein.

Bei der Lösung gemäß der Fig. 17b sind die Platine 97 und der Stecker 98 dagegen nur über Drähte 104 elektrisch miteinander verbunden, jedoch mechanisch separat befestigt.

Die Platine 97 ist dabei in sowie quer zu ihrer Ebene durch wenigstens zwei Befestigungsbolzen formschlüssig gehalten, welche quer zu ihrer Ebene auf den Innenseiten der Mantelfläche der Sensorschale 2 entlang verlaufen und der Verschraubung 100 zwischen der Sensorschale 2 und dem z. B. in Fig. 2a zu erkennenden übrigen Gehäuse, etwa dem Profil 51d, dienen, und dabei gleichzeitig die Funktion einer Drehmomentstütze für den Drehwinkelsensor erfüllen.

Der Stecker 98 ist in an sich bekannter Weise gegenüber der Stirnfläche der Sensorschale 2 verschraubt, welche er durchdringt. Die von der Innenseite des Steckers 98 abragenden Kontaktstifte sind über Drähte 104 mit der ihnen zugewandten Seite der Platine 97 verbunden.

In beiden Fällen ist zumindest der Bereich des Austrittes der Kontaktstifte 103 aus der Rückseite des Steckers 98 sowie der Übergang zwischen dem Stecker und der Innenseite der Sensorschale 2, an welcher der Stecker 98 anliegt, mittels eines, insbesondere aushärtenden, Dichtstoffes vergossen, beispielsweise einem Kunstharz. Vorzugsweise umfaßt der Verguß bei der Lösung gemäß 17a den gesamten Zwischenraum zwischen der Platine 97 und der vom Stecker 98 durchdrungenen Wand der Sensorschale 2 oder umschließt auch die Platine 97 noch vollständig, wie alternativ mittels Dichtstoffes 99' angedeutet.

Bei der Lösung gemäß Fig. 17b erfaßt der Verguß wenigstens die Verbindung der Kontaktstifte 103 mit den Drähten 104, wobei darauf geachtet wird, daß die Verschraubung 100 sowie die formschlüssige Verbindung der Platine 97 und den Befestigungsbolzen 101 nicht mit vergossen ist.

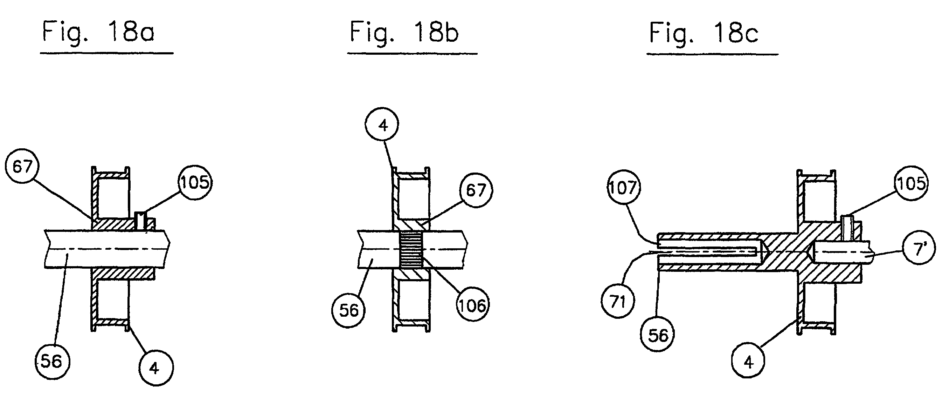

Die Figuren 18 zeigen unterschiedliche Verbindungen zwischen der Welle 56 und der Meßseil-Trommel 4, wie sie beispielsweise auch in Fig. 2a zu erkennen ist.

Bei den Lösungen gemäß Fig. 18a und 18b sind die Meßseil-Trommel 4 und die Welle 56 separate Bauteile.

Bei Fig. 18a ist die Meßseil-Trommel 4, deren zentrale Durchgangsöffnung paßgenau dem Außendurchmesser der Welle 56 entspricht, auf diese aufgeschoben und an der gewünschten Stelle an einer quer zur Welle 56 durch die Nabe der Meßseil-Trommel 4 hindurchgeschraubte Klemmschraube fixiert. Zu diesem Zweck weist die Meßseil-Trommel 4 nur auf einer ihrer Stirnseiten eine Stimscheibe auf, und die Nabe ist auf der gegenüberliegenden Stirnseite über die sonstige Stirnfläche der Trommel 4 hinaus verlängert, so daß in diesem verlängerten Bereich die Klemmschraube 105 gut zugänglich angeordnet werden kann.

Bei der Lösung gemäß Fig. 18b erfolgt die Fixierung der Meßseil-Trommel 4 auf der Welle 56 mit Hilfe eines Toleranzringes 106, der in einer entsprechenden Ringnut der Welle 56 angeordnet und auf den anschließend in Längsrichtung der Welle 56 die Meßseil-Trommel 4 lediglich aufgeschoben wird.

Der Toleranzring 106 besteht dabei aus einem ringförmig geschlitzten, also C-förmigen, Ring, der in Blickrichtung der Welle 56 die Form eines wellenförmigen Bandes aufweist, so daß dessen Wellen über den Außenumfang der Welle 56 hinausstehen. Durch das Überschieben der Trommel 4 werden diese Wellen etwas flachgedrückt, und verklemmen dadurch kraftschlüssig und ohne weitere Maßnahmen die Meßseil-Trommel 4 auf der Welle 56, wodurch der Toleranzring 106 in Umfangsrichtung länger wird und sich dessen Schlitz verkleinert.

Dadurch ist ein größeres maßliches Spiel zwischen dem Innenumfang der Durchgangsöffnung der Trommel 4 und dem Außenumfang der Welle 56 akzeptierbar.

Fig. 18c zeigt dagegen eine Bauform, bei der die Welle 56 mit der Meßseil-Trommel 4 zusammen einstückig ausgebildet ist. Dabei entspricht die Meßseil-Trommel 4 mit nur einseitiger Stimscheibe und auf der anderen Seite vorstehenden Nabenbereich und Durchgangsbohrung für die Klemmschraube 105 den Erläuterungen gemäß Fig. 18a. In die Stirnseite des Nabenbereiches auf der Seite der Klemmschraube 105 ist jedoch nur eine zentrale Sacklochbohrung für das Einstecken des Zapfens 7 des Drehwinkelsensors 6, wie wiederum am besten in Fig. 2a zu erkennen, vorgesehen. Auf der gegenüberliegenden Stirnseite erstreckt sich aus der Stirnfläche der Meßseil-Trommel 4 die einstückig hiermit ausgebildete Welle 56 axial in Fig. 18c nach links. Die Welle 56 ist dabei von ihren freien Stirnseite her einerseits mit einer Sacklochbohrung 107 und andererseits mit einem annähernd ebenso tiefen Federschlitz 71 versehen, die jedoch beide nicht den Bereich der Meßseil-Trommel 4 erreichen. Alternativ könnte anstelle der Sacklochbohrungen 107 sowie der entgegengesetzten Sacklochbohrung 107' für den Zapfen 7 auch eine Durchgangsöffnung vorhanden sein.

Der Federschlitz 71 dient - wie bereits beschrieben - dem Einschieben des gekröpften inneren Endes der Flachformfeder, während die Sacklochbohrungen 107' dem Einstecken eines mit dem Gehäuse verbundenen Führungszapfens und damit der Lagerung der Welle 56 an ihrem freien Ende dient.

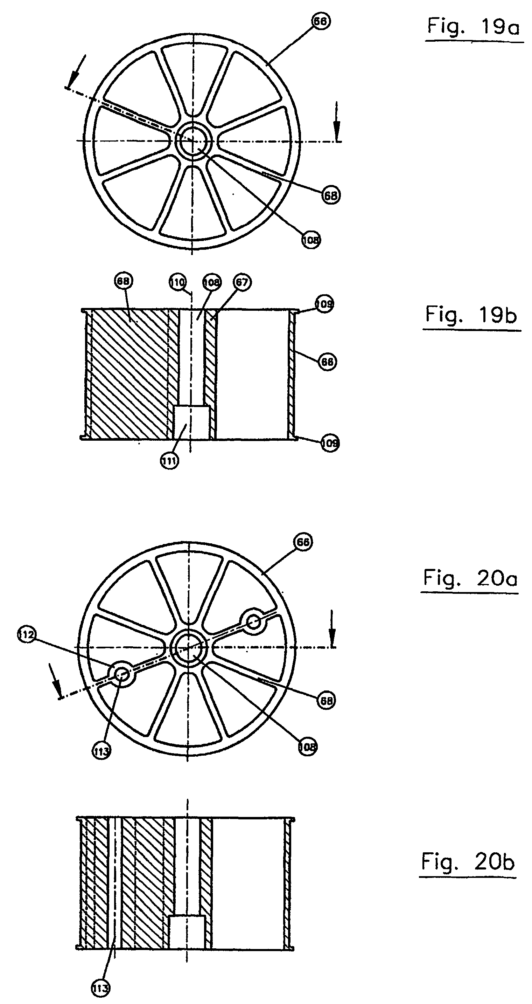

Die Figuren 19 bis 23 zeigen unterschiedliche Bauformen der Meßseil-Trommel 4, jeweils in Aufsicht und Längsschnittdarstellung.

Allen Lösungen ist gemeinsam, daß im Zentrum eine Öffnung, insbesondere eine Durchgangsöffnung 108, auf der Rotationsachse vorhanden ist, und auf der äußeren Mantelfläche, die als Wickelfläche 66 dient, stirnseitig Anlaufflächen vorhanden sind, um ein Herabglelten des aufzuwickelnden Meßseiles, welches in den Figuren 19 bis 22 der Übersicht halber nicht dargestellt ist, zu vermeiden.

Die Fig. 19 zeigt dabei eine Trommel 4, wie sie als endloses Strangpreßteil, gepreßt in Richtung der Rotationsachse 110 der Trommel, durch ablängen hergestellt werden könnte, dabei sind die Wickelfläche 66, die Nabe 67 und die Speichen 68 einstückig miteinander geformt. Als Nachbearbeitung ist lediglich eine fast über die gesamte axiale Erstreckung der Wickelfläche 66 sich erstreckende Vertiefung auf der äußeren Mantelfläche einzuarbeiten, wodurch an den stirnseitigen Enden der Wickelfläche 66 die radial vorstehenden, über den Umfang umlaufenden, Ränder 109 entstehen.

Auch die Verbreiterung der auf der Rotationsachse 110 für die Welle durchgehende Öffnung 108 in Form einer Verbreiterung 111 muß nachträglich eingearbeitet werden.

Die Bauform gemäß Fig. 20 unterscheidet sich von derjenigen gemäß Fig. 19 dadurch, daß zusätzlich in einigen, beispielsweise in zwei einander gegenüberliegenden Speichen 68 etwa in der Mitte der radialen Erstreckung dieser Speichen eine Verdickung 12 angeordnet ist, die der Aufnahme einer in Axialrichtung durchgehenden Längsöffnung 113 dient, in welche Längsführungselemente eingebracht werden können.

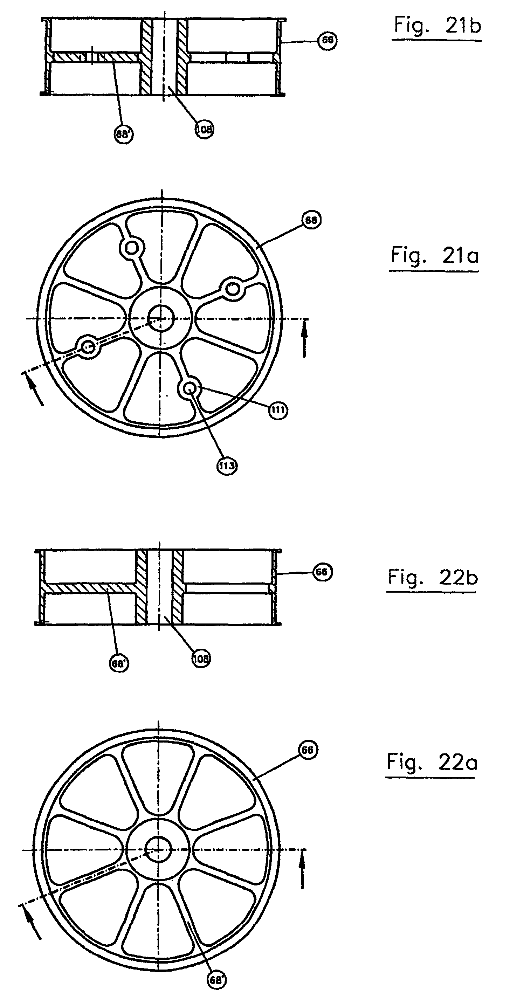

Die Lösung gemäß Fig. 21 unterscheidet sich von der Lösung gemäß Fig. 20 dadurch, daß zusätzlich - aus Gründen der Gewichtserspamis - die Speichen, die bei Herstellung aus einem Strangpreßprofil über die gesamte axiale Erstreckung der Trommel 4 durchgehen, in dieser axialen Richtung durch Abfräsen oder ein anderes Materialabnahmeverfahren auf einen Bruchteil der axialen Länge der Trommel reduziert werden. Aus Stabilitätsgründen wird dabei eine Materialabnahme von beiden Stirnseiten her bewirkt, so daß etwa in der Mitte der axialen Erstreckung axial kurze Speichen 68' verbleiben.

Auch hier befinden sich - diesmal in zwei Paaren von je zwei diametral gegenüberliegenden - Speichen 68' Verdickungen 111, in welchen Längsöffnungen 113 angeordnet sind.

Die Lösung gemäß Fig. 22 unterscheidet sich von derjenigen der Fig. 20 dadurch, daß die Speichen 68' über ihre gesamte radiale Erstreckung gleichbleibend schmal ausgebildet sind, und keine solche Verdickung 111 und darin untergebrachte Längsöffnung 113 aufweisen.

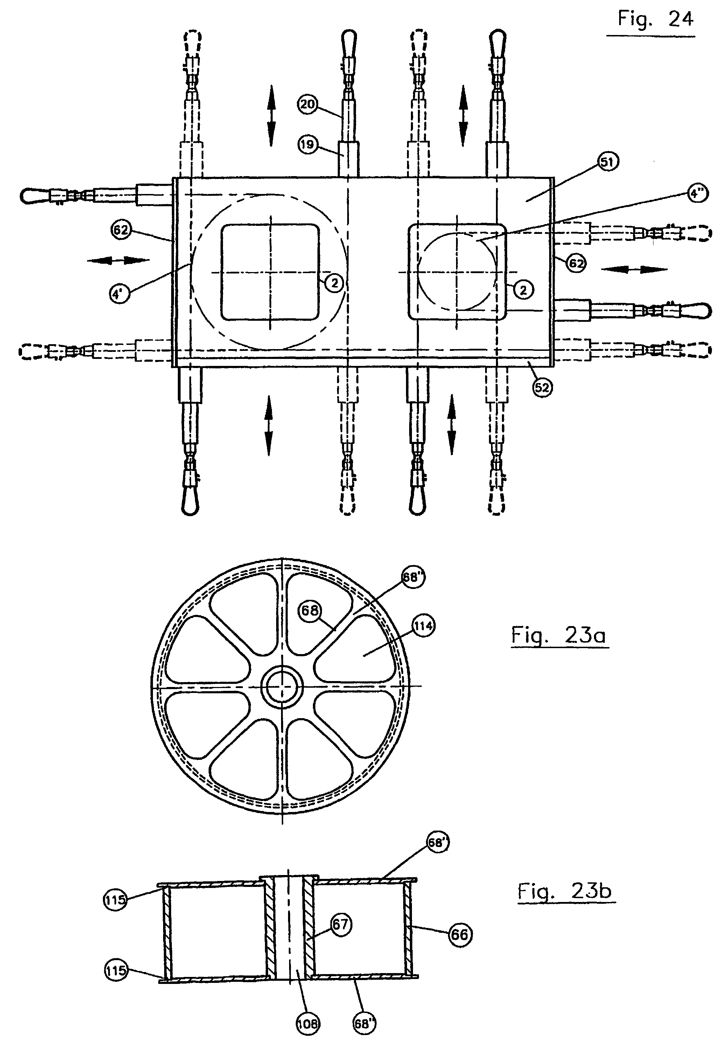

Die Bauform gemäß Fig. 23 zeigt einen mehrteiligen Aufbau der Meßseil-Trommel:

Die Wickelfläche 66 besteht aus einem Rohrabschnitt, und gleiches gilt für die Nabe 67. Verbunden werden die beiden Teile durch stirnseitige Speichenplatten 68", die eine runde Außenkontur besitzen sowie eine zentrale Öffnung zur Aufnahme der Nabe 67.

In den Speichenplatten 68" sind einzelne Speichen 68 erzeugt durch Herstellen von Durchbrüchen in Form von Zwischenfeldem 114 zwischen den einzelnen Speichen 68. Die Zwischenfelder 114 können durch Stanzen, Fräsen, Sägen oder jedes andere Materialabtragverfahren hergestellt werden.

Die feste, insbesondere verdrehsichere, Verbindung der einzelnen Teile miteinander erfolgt mittels Kleben, Löten, Schweißen oder jeder anderen Verbindungsart, wie etwa Preßsitz.

Um eine exakte Positionierung der Einzelteile zueinander vor deren Verbindung zu gewährleisten, weist die hülsenförmige Nabe 67 an ihrem Außenumfang im Bereich der stirnseitigen Enden jeweils eine in die gleiche Richtung weisende Schulter zum Anlegen des Innenumfanges der jeweiligen Speichenscheibe 68' auf. Weiterhin weisen die Speichenscheiben 68 in der Nähe ihres Außenumfanges einen ringförmigen Absatz 115 auf, der im montierten Zustand der Speichenscheiben 68" gegen die jeweils andere Speichenscheibe gerichtet ist, und dem Positionieren der rohrförmigen Wickelfläche dient. Der Absatz 115 muß dabei in axialer Richtung nur wenige zehntel Millimeter tief sein, und kann mit allen bekannten Materialabtragverfahren hergestellt sein, insbesondere jedoch auch durch chemisches Ätzen bewirkt werden.

Fig. 24 zeigt einen Mehrfach-Meßseil-Wegsensor, bei dem das Profil 51, welches als Gehäuse dient, auf eine solche Länge abgelängt ist, daß zwei vollständige Meßseil-Wegsensoren mit allen Bauteilen darin hintereinander, also mit parallel und im Abstand zueinander liegenden, Wellen mit darauf aufgebrachten z. B. Meßseil-Trommeln darin untergebracht werden können.

Fig. 4 zeigt einen solchen Mehrfach-Meßseil-Wegsensor mit zwei Sensoreinheiten, und zwar in Blickrichtung beispielsweise der Fig. 3a von rechts, also auf die Sensorschale 2, betrachtet, und ebenfalls mit einer Fußplatte 52 am unteren Ende des Profils 51, bei Orientierung des Sensors, wie in Fig. 24 dargestellt.

Es ist jedoch offensichtlich, daß auch wesentlich mehr als zwei Sensoren auf diese Art und Weise in einem einzigen Profil 51 untergebracht werden können.

Fig. 24 zeigt ferner, daß im vorliegenden Fall die beiden Sensoren unterschiedlich große Meßseil-Trommeln 4' bzw. 4" aufweisen, je nach dem gewünschten Anwendungsfall.

Es ist ferner ersichtlich, daß der Seileinlaufstutzen 19 mit dem Seilführungselement 20 sowohl in jeder der in Längsrichtung des Profiles 51 verlaufenden Außenflächen, welche zu der Längsfläche, auf welcher die Sensorschalen 2 sitzen, angeordnet werden kann, und ebenso an den Stirnflächen des Profiles 51, also an den diese Stirnflächen verschließenden Längsdeckel 62.

Zusätzlich besteht an jeder dieser Flächen noch die Wahl der Anordnung auf einer der tangentialen zur jeweiligen Trommel 4' bzw. 4", abhängig von der gewünschten Wickelrichtung (im Uhrzeigersinn oder gegen den Uhrzeigersinn) des Meßseiles auf der Trommel 4' bzw. 4".

In Fig. 24 sind dabei alle möglichen Positionen für ein Abwickeln des Meßseiles gegen den Uhrzeigersinn in durchgezogenen Linien dargestellt, und für eine Abwicklung des Seiles im Uhrzeigersinn mit unterbrochenen Linien.

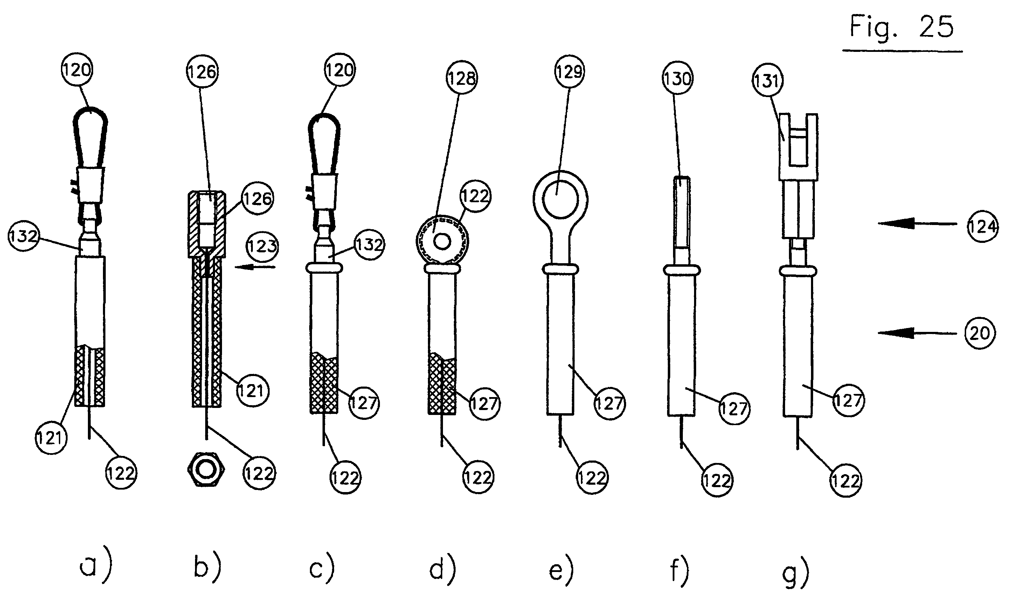

Fig. 25 zeigt unterschiedliche Seilendverbindungen, mit deren Hilfe im Endbereich 122 des Seiles ein Adapterteil 124 zum Befestigen desjenigen Bauteiles, dessen Position mit dem Meßseil-Wegsensor bestimmt werden soll, befestigt ist.

Dabei besteht das grundsätzliche Problem darin, daß an dieser Seilendverbindung auch ein dämpfendes Bauteil für den Fall vorhanden sein muß, daß das weit vom Meßseil-Wegsensor entfernte Ende des Meßseiles losgelassen wird oder sich sehr schnell auf dem Meßseil-Wegsensor zu bewegt und dann mit hoher kinetischer Energie auf den Seileinlaufstutzen 19, der z. B. in den Figuren 1ff zu erkennen ist, aufschlägt.

Damit bei einem solchen Aufprall die Seilendverbindung nicht beschädigt oder gar vollständig zerstört wird, ist eine Dämpfungstülle 121 so angeordnet, daß sie beim Aufprall zwischen dem Adapterteil 124 und der entsprechenden Auftrefffläche, meist der Stirnfläche des Seileinlaufstutzens 19, liegt.

Wie in Fig. 25a dargestellt, handelt es sich dabei etwa um eine Dämpfungstülle aus Gummi oder einem anderen elastischen Material, welche auf dem Seilendbereich angeordnet ist, und eine Durchgangsöffnung aufweist, welche den Endbereich 122 des Seiles lose umschließt. Um eine Relativbewegung zwischen Gummihülle und dem Adapterteil 124, welches in Fig. 25a ein Wirbelnippel ist, an dem der Karabiner 120 eingehängt ist, zu vermeiden, ist die Dämpfungstülle 121 durch festes Aufstecken, Verkleben oder auf andere Art und Weise mit dem Adapterteil 124, etwa einem Wirbelnippel 132, fest verbunden.

Wie Fig. 25b zeigt, ist das Adapterteil ein Gewindebolzen 126, mit welchem der Seilendbereich 122 fest verbunden ist. Auf die Austrittsseite des Seilendbereiches 122 ist auf eine dort angeordnete Außenschulter die Dämpfungstülle 121 aufgesteckt oder aufgeklebt und auf der gegenüberliegenden Stirnseite weist der Gewindebolzen 125 ein Innengewinde 126 zum Einschrauben eines weiteren Bauteiles auf.

In den Figuren 25c bis g ist anstelle der den Endbereich 122 lose umschließenden Dämpfungstülle 121 ein Formteil 127 aus elastischem, vorzugsweise sogar aus deformierbaren Material vorhanden, welches jedoch den Seilendbereich 122 dicht umschließt, vorzugsweise auch im Bereich der Verbindungsstelle zwischen dem Seilendbereich 122 und dem jeweiligen Adapterteil 124. Das Aufbringen des Formteiles 127 erfolgt durch Umspritzen, Aufschrumfen, Aufpressen oder auf andere Weise, die eine innige Verbindung des Außenumfangs des Seiles im Endbereich 122 mit dem Formteil 127 bewirkt.

All diese Lösungen zielen darauf ab, bei dem beschriebenen unerwünschten Aufprallen des Seilendes auf den Meßseil-Wegsensor eine möglichst große Dämpfung zu erzielen.

Im Zusammenspiel zwischen den über eine große axiale Estreckung geführten Dämpfungstüllen 121 bzw. Formteile 127, deren axiale Erstreckung mindestens 1 cm, vorzugsweise mind. 3 cm beträgt, mit der sehr steifen, aber dennoch gut dämpfenden Gehäusebauform als Profil ergibt sich damit eine sehr gute Dämpfung eines solchen Aufschlages, besonders wenn das Formteil 127 innig mit dem Endbereich 122 des Seiles verbunden ist, da über die gesamte axiale Länge dieser Verbindung Kräfte aufgenommen werden können.

In Fig. 25c ist der gleiche Wirbelnippel 132 wie in Fig. 25a vorhanden, wieder mit einem Karabiner 120 als Befestigungsmöglichkeit, jedoch ist die nicht erkennbare Verbindungsstelle zwischen dem Ende des Seiles und dieses Wirbelnippels bereits vollständig und dicht vom Formteil 127 umschlossen.

Die Lösung gemäß Fig. 25d unterscheidet sich dadurch, daß als Adapterteil 124 ein Ring 128 verwendet ist, der vom Endbereich 122 des Seiles umlaufen wird.

In Fig. 25e ist der Adapter 124 dagegen eine Ringöse 129, welche nur an einer Seite mit dem Endbereich 122 verbunden ist.

In Fig. 25f ist der Adapter 124 ein Gewindebolzen 130 ähnlich dem Gewindebolzen 126, jedoch mit einem Außengewinde zur Befestigung weiterer Bauteile auf der vom Seilendbereich 122 abgewandten Seite.

In Fig. 25g ist als Adapter 124 ein Gabelkopf 131 verwendet, der an seinem freien Ende eine Gabel zum Hindurchstecken oder Einschrauben eines Querbolzens aufweist.

Als Material für das Formteil 127 wird dabei insbesondere ein gut klebendes, sehr elastisches Material, etwa ein Schmelzklebstoff, welcher zwischen 150°C und 300°C bereits niedrig-viskosteigig wird, bevorzugt, und als Seil ein aus mehreren Filamenten bestehendes, insbesondere gezwirntes, litzenartiges Seil, damit sich das Material des zähelastischen Formteiles 127 in dessen Zwischenräumen verhaften kann.

Ein solcher Schmelzklebstoff könnte beispielsweise ein modifiziertes Polyamid, ein Polyurethan ein Polyethylen oder ein Polyoxymethylen (POM) sein, oder auch ein Silikon, ein elastisches Epoxydharz oder ein elastisches Polyurethan, wobei die letzten drei genannten auch im kalten Zustand gespritzt werden können.

Das Umspritzen erfolgt dabei vorzugsweise durch Einlegen der fertigen Seilendverbindung in eine umgebende Spritzform.

## Patentansprüche

1. Meßseil-Wegsensor mit
- einem Gehäuse (1),
- einer Meßseil-Trommel (4),
- einem Drehwinkelsensor (6) und
- einer Drehfeder (5) zum Rückdrehen der Meßseil-Trommel (4),
wobei
das Gehäuse (1) wenigstens teilweise aus einem geraden Profil (51) mit in Längsrichtung (50) gleichbleibendem Querschnitt, insbesondere einem Abschnitt eines Strangpreßprofiles, besteht,
**dadurch gekennzeichnet, daß**
die Meßseil-Trommel (4), die Drehfeder (5) und der Drehwinkelsensor (6) im wesentlichen koaxial angeordnet sind und deren Achsrichtung (60) quer zur Längsrichtung (50) des Profiles (51) verläuft.

2. Meßseil-Wegsensor nach Anspruch 1,
**dadurch gekennzeichnet, daß**
die Achsrichtung (60) einen Schenkel des Profiles (51) durchdringt.

3. Meßseil-Wegsensor nach einem der Ansprüche 1 bis 2,
**dadurch gekennzeichnet, daß**
das Profil (51) ein Kastenprofil, insbesondere ein rechteckiges Kastenprofil (51d) ist, insbesondere das Profil (51) ein Doppelkasten, insbesondere ein rechteckiges Doppelkastenprofil (51e) ist, insbesondere das Profil (51) zusätzlich eine nach außen seitlich wenigstens einseitig überstehende integrale Fußplatte (52) aufweist.

4. Meßseil-Wegsensor nach einem der vorhergehenden Ansprüche,
**dadurch gekennzeichnet, daß**
der bzw. die Hauptschenkel (57) des Profiles, welches der Schenkel mit der längsten Erstreckung quer zur Längsrichtung (50) ist, eine gegenüber den Nebenschenkeln (58) vergrößerte Wandstärke zur Aufnahme der Lager (59) für die Welle (56) aufweist.

5. Meßseil-Wegsensor nach einem der vorhergehenden Ansprüche,
**dadurch gekennzeichnet, daß**
in den Schenkeln, insbesondere den Hauptschenkeln (57) des Profiles in Längsrichtung verlaufende Längsnuten (53), insbesondere mit hinterschnittenem Querschnitt, ausgebildet sind, insbesondere die Längsnuten (53) einen etwa Ω-förmigen Querschnitt aufweisen, insbesondere die Längsnuten (53) in den Innenseiten des Profiles ausgebildet sind.

6. Meßseil-Wegsensor nach Anspruch 5,
**dadurch gekennzeichnet, daß**
Längsnuten (53) in der Nähe der Eckbereiche zwischen den Hauptschenkeln (57) und den Nebenschenkeln (58), jedoch nicht direkt in der Ecke, angeordnet sind.

7. Meßseil-Wegsensor nach einem der Ansprüche 5 bis 6,
**dadurch gekennzeichnet, daß**
bei zwei gegenüberliegenden Schenkeln die Längsnuten (53) spiegelbildlich gegenüberliegend in den beiden Schenkeln angeordnet sind.

8. Meßseil-Wegsensor nach einem der vorhergehenden Ansprüche,
**dadurch gekennzeichnet, daß**
die Meßseil-Trommel (4) parallel auf der einen Seite des Hauptschenkels (57) eines der offenen Profile (51) angeordnet ist und auf der davon abgewandten Seite des Hauptschenkels (57) die Drehfeder (5) in einer Drehfederschale (3) angeordnet ist, die auf der Außenfläche des Hauptschenkels (57) des Profiles (51) aufsitzt.

9. Meßseil-Wegsensor nach einem der vorhergehenden Ansprüche,
**dadurch gekennzeichnet, daß**
die Meßseil-Trommel (4) im Innenraum eines Kastenprofiles (51d) zwischen dessen Hauptschenkel (57a, 57b) angeordnet ist und auf der davon abgewandten Seite des Hauptschenkels (57a, 57b) die Drehfeder (5) in einer Drehfederschale (3) angeordnet ist, die auf der Außenfläche des Hauptschenkels (57a, 57b) des Profiles (51d) aufsitzt.

10. Meßseil-Wegsensor nach einem der vorhergehenden Ansprüche,
**dadurch gekennzeichnet, daß**
die Drehfederschale (3) im wesentlichen aus einem geraden Profil (51') mit in Längsrichtung (50') gleichbleibendem Querschnitt, insbesondere einem Abschnitt eines Strangpreßprofiles, besteht.

11. Meßseil-Wegsensor nach Anspruch 10,
**dadurch gekennzeichnet, daß**
die Längsrichtung (50') des Profiles (51') koaxial zur Achsrichtung (60) der Welle (56) verläuft und das Profil (51') ein geschlossenes Profil ist, welches auf der äußeren Stirnseite mit einem Achsdeckel (61) verschlossen ist.

12. Meßseil-Wegsensör nach Anspruch 10,
**dadurch gekennzeichnet, daß**
die Längsrichtung (50') parallel zur Längsrichtung (50) verläuft und das Profil (51') ein C-Profil ist, welches mit seinen frei endenden Schenkeln auf dem Hauptschenkel (57) des Profiles (51) für die Meßseil-Trommel (4) aufsetzt.

13. Meßseil-Wegsensor nach einem der vorhergehenden Ansprüche,
**dadurch gekennzeichnet, daß**
bei einem Doppelkastenprofil (51e) der eine Hohlraum als Aufnahmebereich (4') für die Meßseil-Trommel (4) und der andere Hohlraum als Aufnahmebereich (5') für die Drehfeder (5) dient.

14. Meßseil-Wegsensor nach Anspruch 13,
**dadurch gekennzeichnet, daß**
das Profil (51) ein C-Profil (51c) ist, dessen drei offene Seiten durch einen angepaßt dimensionierten C-Deckel (63), welcher insbesondere ein Abschnitt eines Strangpreßprofiles ist, verschlossen wird, insbesondere der Längsdeckel (62) bzw. C-Deckel (63) mit dem Profil (51) bzw. (51') durch Schrauben verbunden wird, die selbstschneidend in die Längsnuten (53) des Profiles (51) bzw. (51') einschraubbar sind.

15. Meßseil-Wegsensor nach einem der vorhergehenden Ansprüche,
**dadurch gekennzeichnet, daß**
der Drehwinkelsensor (6) auf der von der Drehfeder (5) abgewandten Seite der Meßseil-Trommel (4) angeordnet ist.

16. Meßseil-Wegsensor nach Anspruch 1 bis 14,
**dadurch gekennzeichnet, daß**
die Drehfeder (5) zwischen der Meßseil-Trommel (4) und dem Drehwinkelsensor (6) angeordnet ist.

17. Meßseil-Wegsensor nach einem der vorhergehenden Ansprüche,
**dadurch gekennzeichnet, daß**
eine auf die Meßseil-Trommel (4) und/oder die Drehfeder (5) einwirkende Bremse (64), welche insbesondere nur beim Aufwickeln des Meßseiles wirkt, angeordnet ist, und insbesondere es sich bei der Bremse (64) um eine Fluidbremse, insbesondere eine Luftbremse, eine Wirbelstrombremse oder eine MagnetBremse handelt.

18. Meßseil-Wegsensor nach einem der vorhergehenden Ansprüche,
**dadurch gekennzeichnet, daß**
wenigstens die Wickelfläche (66) der Meßseil-Trommel (4) aus einem geraden Profil (51") mit in Längsrichtung (50") gleichbleibendem Querschnitt, insbesondere einem Abschnitt eines Strangpreßprofiles, besteht, insbesondere die Wickelfläche (66) aus einem Rundrohr-Profil (51f) besteht, an dessen Stirnseiten jeweils eine radial überstehende Anlaufscheibe (65) befestigt ist, welche mit einer zentralen Nabe (67) für die Lagerung der Welle (56) ausgestattet ist, und insbesondere Wickelfläche (66) und Nabe (67) einstückig durch einen Abschnitt eines Spezialprofiles (51s) gebildet werden, welches mehrere radial verlaufende Speichen (68) zwischen der Wickelfläche (66) und der zentralen Nabe (67) integral aufweist und insbesondere mit zwei radial überstehenden stirnseitigen Anlaufscheiben zur Meßseil-Trommel (4) komplettiert ist.

## Claims

1. A measuring cable displacement sensor comprising
- a housing (1),
- a measuring cable drum (4),
- a rotating angle sensor (6) and
- a spring (5) engaging the measuring cable drum (4), and operable to urge it in the winding-on direction whereupon the housing (1) comprises at least partially an at least substantially straight profile portion (51) of an uniform cross-section in its longitudinal direction (50), and in particular an extruded profile portion, **characterized in that** the measuring cable drum (4), the spring (5) and the rotating angle sensor (6) are arranged in a substantially coaxial relationship and the axial direction (60) thereof extends transversely with respect to the said longitudinal direction (50) of the housing profile portion (51).

2. A measuring cable displacement sensor according to claim 1, **characterized in that** the axial direction (60) passes through one of the housing profile portion (51) limbs.

3. A measuring cable displacement sensor according to one of the claims from 1 to 2, **characterized in that** the profile portion (51) is a box profile portion, in particular a rectangular box profile portion (51d), in particular the profile portion (51) is a double-box profile portion, in particular a rectangular double-box profile portion (51e), in particular the said profile portion (51) additionally includes an integral base plate (52) which projects outwardly laterally at least at one side.

4. A measuring cable displacement sensor according to any one of the preceding claims, **characterized in that** the profile portion has at least a main limb (57) and a secondary limb, the said main limb being the limb of the profile portion with the longest transversely extent with respect to the said longitudinal direction (50) and having an increased wall thickness in comparison with the said secondary limbs (58) and bearing means (59) for supporting the said shaft (56).

5. A measuring cable displacement sensor according to any one of the preceding claims, **characterized in that** the profile portion (51) has main limbs (57) and longitudinal grooves (53) extending in the longitudinal direction (50), in particular the said longitudinal grooves being of an undercut cross-sectional configuration, in particular the said longitudinal grooves being of a substantially Ω shaped cross-sectional configuration, in particular the longitudinal grooves (53) being provided in the inside surfaces of the said profile portion.

6. A measuring cable displacement sensor according to claim 5, **characterized in that** the profile portion (51) has main limbs (57) and secondary limbs (58) and corner regions there between, including longitudinal grooves (53) arranged in the proximity of the said corners but not directly on the said corners.

7. A measuring cable displacement sensor according to one of the claims from 5 to 6, **characterized in that** the profile portion (51) has first and secondary mutually oppositely arranged limbs, the longitudinal grooves being arranged in the limbs in an opposite mirror-image relationship.

8. A measuring cable displacement sensor according to any one of the preceding claims, **characterized in that** the profile portion (51) is a profile portion having a main limb comprising first and second sides, wherein the measuring cable drum is arranged in a parallel relationship on a first side of the said main limb (57), wherein the said spring (5) is arranged on the second side of the said main limb (57), and further including a spring shell portion (3) for accommodating the said spring, spring shell portion which is fixed on the outside surface of the said main limb (57) of the profile portion (51).

9. A measuring cable displacement sensor according to any one of the preceding claims, **characterized in that** the profile portion (51) is a box profile portion (51d) having main limbs (57a, 57b) and a space there within, wherein the said measuring cable drum is arranged in the interior of the said box profile portion (51d) between the said main limbs (57a, 57b), and wherein the said spring (5) is arranged on the side of the main limbs (57a, 57b) remote from the said measuring cable drum (4) in a spring shell portion (3) fixed on the outside surface of the said main limbs (57a, 57b) of the profile portion (51).

10. A measuring cable displacement sensor according to any one of the preceding claims, **characterized in that** the spring shell portion (3) accommodating the said spring (5) substantially comprises a further straight profile portion (51') of a cross-section which is uniform in its longitudinal direction (50'), in particular an extruded profile portion.

11. A measuring cable displacement sensor according to claim 10, **characterized in that** the longitudinal direction (50') of the said straight profile portion (51') constituting the said spring shell portion (3) extends coaxially with respect to the axial direction (60) of the shaft (56) and the said straight profile portion (51') is a closed profile portion which is closed at an outer end by cover means (61).

12. A measuring cable displacement sensor according to claim 10, **characterized in that** the longitudinal direction (50') of the said straight profile portion (51') constituting the said spring shell portion (3) extends at least substantially in parallel to the longitudinal direction (50) of the profile portion of the said housing (1) and the profile portion of the said spring shell portion (3) is a substantially C shaped profile portion having limbs which terminate freely and with which is fixed to a main limb of a profile portion of the said measuring cable drum (4).

13. A measuring cable displacement sensor according to any one of the preceding claims, **characterized in that** the said profile portion (51) of the said housing (1) is a double-box profile portion (51e) comprising a hollow space serving as a receiving region (4') for accommodating the measuring cable drum (4) and a second hollow space serving as a receiving region (5') for accommodating the spring (5).

14. A measuring cable displacement sensor according to claim 13, **characterized in that** the said profile portion (51) of the said housing (1) is an at least substantially C shaped profile portion having three open sides and further including a dimensioned C shaped cover means (63) adapted to the said C shaped profile portion for closing the same, in particular the cover being an extruded portion, in particular the longitudinal cover (62) and the C shaped cover means (63) respectively will be connected to the said profile portion (51) and the said straight profile portion (51') respectively by screw means which are self-tappingly screw able into the longitudinal grooves (53) of the said profile portion (51) and the said straight profile portion (51') respectively.

15. A measuring cable displacement sensor according to any one of the preceding claims, **characterized in that** the said rotating angle sensor (6) is arranged at a side of the measuring cable drum (4) which is remote from the said spring (5).

16. A measuring cable displacement sensor according to any one of the claims from 1 to 14, **characterized in that** the said spring (5) is arranged between the said measuring cable drum (4) and the said rotating angle sensor (6).

17. A measuring cable displacement sensor according to any one of the preceding claims, **characterized in that** there is a brake (64) arranged on the measuring cable drum (4) and/or the spring (5) which is intended to operate in particular only in the measuring cable winding-on direction, and in particular the said brake (64) is a fluid brake, in particular an air brake, in particular an eddy current brake or a magnetic brake.

18. A measuring cable displacement sensor according to any one of the preceding claims, **characterized in that** at least the winding surface (66) of the said measuring cable drum (4) comprises an elongate straight profile portion (51") of an uniform cross-section in its longitudinal direction (50"), in particular an extruded portion, in particular the winding surface (66) comprising a round tubular profile portion (51f) further including a contact disk (65) arranged at each of the said ends and projecting radially there beyond, each of the said disks (65) having a central hub means (67) for supporting the said measuring cable drum on a shaft means (65), in particular the said winding surface (66) and the said hub (67) being integrally formed by a part of a profile portion (51s) which has a plurality of radially extending spokes (68) between the said winding surface (66) and the said central hub means (67) and in particular the first and second contact disks arranged to the said profile portion are radially projecting there beyond to constitute the configuration of the said measuring cable drum (4).

## Revendications

1. Senseur de déplacement avec câble de mesure, avec
- une carcasse (1)
- un tambour pour le câble de mesure (4)
- un senseur de l'angle de rotation (6) et
- un ressort hélicoïdal (5) pour la rotation en retour du tambour pour le câble de mesure (4), à lequel la carcasse 1 qui consiste au moins partialement d'un profil droit (51) avec une section transversale constante dans la direction longitudinale (60), spécialement d'un segment d'un profil extrudé **caractérisé en ce que**, le tambour pour le câble de mesure (4), le ressort hélicoïdal (5) et le senseur de l'angle de rotation (6) sont essentiellement disposés de manière coaxiale et dont la direction de l'axe (60) passe transversalement sur la direction longitudinale (50) du profil (51).

2. Senseur de déplacement avec câble de mesure, selon la revendication 1 **caractérisé en ce que**, la direction de l'axe (60) pénétré par un côté du profil (61).

3. Senseur de déplacement avec câble de mesure, selon l'une des revendications 1 à 2 **caractérisé en ce que**, le profil (51) est un profil de carcasse, spécialement un profil de carcasse rectangulaire (51d), spécialement le profil (51) est une carcasse à deux cavités, spécialement un profil de carcasse rectangulaire à deux cavités (51e), spécialement le profil (51) présente en outre une plaque de base intégrale (52) sortie latéralement en dehors vers l'extérieur, au moins sur une partie.

4. Senseur de déplacement avec câble de mesure, selon l'une des revendications antérieures, **caractérisé en ce que**, le côté principal (57) du profil, dont le côté avec la plus grand étendue est transversale sur la direction longitudinale (50), présente une épaisseur plus grande de la paroi par rapport au côté secondaire (58) pour l'introduction du palier (59) pour l'arbre (56).

5. Senseur de déplacement avec câble de mesure, selon l'une des revendications antérieures, **caractérisé en ce que**, sur les côtés, spécialement sur le côté principal (57) du profil il y a des cannelures longitudinales (53) qui se déroulent dans la direction longitudinale, spécialement avec une section transversale entaillé, spécialement les cannelures longitudinales (53) ont dans la section transversale à peu près la forme de la lettre Ω, spécialement les cannelures longitudinales (53) sont dans les parties intérieures du profil.

6. Senseur de déplacement avec câble de mesure, selon la revendication 5, **caractérisé en ce que**, les cannelures longitudinales (53) se trouvent tout près de la zone de coin entre les côtés principaux (57) et les côtés secondaires (58), mais pas directement dans le coin.

7. Senseur de déplacement avec câble de mesure, selon l'une des revendications 5 à 6, **caractérisé en ce que**, sur les deux côtés opposés les cannelures longitudinales (53) sont disposées face à face symétriquement.

8. Senseur de déplacement avec câble de mesure, selon l'une des revendications antérieures, **caractérisé en ce que**, le tambour pour le câble de mesure (4) est disposé parallèlement sur une face du côté principal (57) du profil ouvert (51) et sur la face opposée du côté principal est disposé le ressort hélicoïdal (5) dans une carcasse du ressort hélicoïdal (3) qui est assise sur la surface extérieure du côté principal (57) du profil (51).

9. Senseur de déplacement avec câble de mesure, selon l'une des revendications antérieures, **caractérisé en ce que**, le tambour pour le câble de mesure (4) est disposé dans l'espace intérieur d'un profil de carcasse (51d) entre les côtés principaux (57a, 57b) de celui-ci et sur la partie opposée au côté principal (57a, 57b) se trouve le ressort hélicoïdal (5) dans une carcasse pour le ressort hélicoïdal (3) qui est assise sur la surface extérieure du côté principal (57a, 57b) du profil (51d).

10. Senseur de déplacement avec câble de mesure, selon l'une des revendications antérieures, **caractérisé en ce que**, la carcasse du ressort hélicoïdal (3) consiste essentiellement d'un profil droit (51') avec une section transversale constante dans la direction longitudinale (50'), spécialement d'un segment d'un profil extrudé.

11. Senseur de déplacement avec câble de mesure, selon la revendications 10 **caractérisé en ce que**, la direction longitudinale du profil (51') se déroule coaxiale à la direction de l'axe (60) de l'arbre (56) et le profil (51') est un profil fermé qui sur la partie extérieure frontale est fermé avec un couvercle de l'axe (61).

12. Senseur de déplacement avec câble de mesure, selon la revendications 10 **caractérisé en ce que**, la direction longitudinale (50') se déroule parallèlement à la direction longitudinale (50) et le profil (51') est un profil C qui est assis avec ses côtés libres sur le côté principal (57) du profil (51) pour le tambour pour le câble de mesure (4).

13. Senseur de déplacement avec câble de mesure, selon l'une des revendications antérieures **caractérisé en ce que**, à un profil de carcasse avec deux cavités (51e), où une cavité sert comme demeure (4') pour le tambour pour le câble de mesure (4) et l'autre cavité comme demeure (5') pour le ressort hélicoïdal (5).

14. Senseur de déplacement avec câble de mesure, selon la revendications 13, **caractérisé en ce que**, le profil (51) est un profil C (51c) dont les trois parties ouvertes seront fermées par l'entremise d'un couvercle C (63) dimensionné de manière correspondante qui spécialement est un segment d'un profil extrudé, spécialement le couvercle longitudinal (62) respectivement le couvercle C (63) sera fixé avec le profil (51) respectivement (51') par vis qui peuvent être vissées auto filetant dans les cannelures (53) du profil (51) respectivement (51').

15. Senseur de déplacement avec câble de mesure, selon l'une des revendications antérieures **caractérisé en ce que**, le senseur de l'angle de rotation (6) est placé sur la partie opposée du tambour pour le câble de mesure (4) par rapport au ressort hélicoïdal (5).

16. Senseur de déplacement avec câble de mesure, selon les revendications 1 à 14, **caractérisé en ce que**, le ressort hélicoïdal (5) est disposé entre le tambour pour le câble de mesure (4) et le senseur de l'angle de rotation (6).

17. Senseur de déplacement avec câble de mesure, selon l'une des revendications antérieures, **caractérisé en ce que**, sur le tambour pour le câble de mesure (4) et/ou sur le ressort hélicoïdal (5) est disposé un frein (64) qui de règle agit seulement à l'enroulement du câble de mesure et spécialement au frein (64), il s'agit d'un frein à fluide, spécialement un frein à air, un frein à courants parasites ou un frein magnétique.

18. Senseur de déplacement avec câble de mesure, selon l'une des revendications antérieures, **caractérisé en ce que**, au moins la surface d'enroulement (66) du tambour pour le câble de mesure (4) consiste d'un profil droit (51") avec la section transversale constante dans la direction longitudinale (50"), spécialement un segment d'un profil extrudé, spécialement la surface d'enroulement (66) consiste d'un profil de tube ronde (51f) dont les parties frontales sont fixées à raison d'une rondelle de guidage (65), sorties en dehors dans la direction radiale et lequel est équipé avec un moyeu central (67) pour le montage dans les paliers de l'arbre (56) et spécialement la surface d'enroulement (66) et le moyeu (67) seront réalisés monobloc par la division d'un profil spécial (51s) qui, entre la surface d'enroulement (66) et le moyeu central (67) présente intégralement plusieurs rais (68) qui se déroulent dans la direction radiale et spécialement il est complété sur les parties frontales avec deux rondelles de guidage sorties en dehors dans la direction radiale pour compléter le tambour pour le câble de mesure (4).
